(19) Europäisches Patentamt

European Patent Office

Office européen des brevets

(11) Publication number: **0 231 171 B1**

# EUROPEAN PATENT SPECIFICATION

(45) Date of publication of patent specification: **23.10.91**  (51) Int. Cl.⁵: **A01K 23/00**

(21) Application number: **85903909.1**

(22) Date of filing: **17.07.85**

(86) International application number:
**PCT/US85/01358**

(87) International publication number:
**WO 87/00397 (29.01.87 87/03)**

(54) **DEVICE WITH POUCHES FOR RECEIVING ANIMAL WASTE.**

(43) Date of publication of application:
**12.08.87 Bulletin 87/33**

(45) Publication of the grant of the patent:
**23.10.91 Bulletin 91/43**

(84) Designated Contracting States:
**AT BE CH DE FR IT LI LU NL**

(56) References cited:
**US-A- 4 103 645**
**US-A- 4 444 152**

(73) Proprietor: **VIDAL, Stella, Maris**
**21 East 22nd Street, Apt. 6H**
**New York, NY 10010(US)**

(72) Inventor: **VIDAL, Stella, Maris**
**21 East 22nd Street, Apt. 6H**
**New York, NY 10010(US)**

(74) Representative: **Jenkins, Richard Gray et al**
**R.G.C. Jenkins & Co. 26 Caxton Street**
**London SW1H 0RJ(GB)**

## Description

Technical Field

The present invention relates to receptors comprising portable appliances intended to be used to receive and retain discharge from a body and in particular relates to a new garment designed to be worn on the body by dogs, cats, mammals or the like, provided with pouches for receiving and retaining the discharge of their solid and fluid body wastes respectively, for the purpose of preventing the soiling of outdoor and indoor areas of public places in urban centers, as well as the soiling inside the house or inside laboratory facilities during diverse operations involving the use of mammals.

Background of the Invention

Heretofore, the problem imposed by scattered body wastes residuals of dogs, cats, or the like on outdoor and indoor areas of public places in urban centers has not yet been solved. The present methods of removal of dog waste from urban sidewalks, parks, etc., utilize such things as pooper scoopers which are cumbersome to handle and fail to effectively remove the waste in a thorough and clean manner, and plastic bags or papers which are a nuisance and tend to be embarrassing to the dog owner who has to pick up the waste by hand in order to comply with clean up laws which impose fines for soiling urban centers. Consequently, some dog owners even prefer to risk the payment of a fine, rather than to pick up the waste with these devices.

The same problem is encountered inside the house, and the usual way of dealing with the problem is by training dogs, cats or the like to perform their bodily functions at a predetermined place on a paper or in a litter box. This approach is also a nuisance requiring the time and the attention of the owner at all times, and more often than not without good results, thus adding to the need of constant cleaning with stain removers, deodorizers, or the like.

As a result of the aforegoing, there is a need for new means of solving this problem by preventing the soiling in the first place.

Furthermore, the few known prior art devices which have been proposed have been impractical, cumbersome and uncomfortable, and have interfered with the bodily movements of the animal. In addition, the receptacles placed under the tail are ineffective in preventing leakage of wastes outside the receptacle which can be easily displaced with the movements of the tail, as shown for example in U.S. Patent No. 4,444,152 and U.S. Patent No.

4,103,645.

The present invention aims to provide the means to overcome the foregoing problem and to avoid the aforementioned disadvantages by providing a new garment designed to be worn on the body by dogs, cats, mammals or the like, provided with pouches for receiving and retaining the discharge of their solid and fluid body wastes respectively.

According to a first aspect of the invention there is provided a device to be worn on the body by an animal such as a dog, cat or the like, for receiving and retaining the discharge of the body waste, said animal being a wearer of the device, and having a top line, a rear, an anal region at the rear, a tail with a root at the rear above the anal region, a genital region, a belly, hind legs, and forelegs, said root having a top and said tail projecting rearwardly from said root said device comprising: a wearer-contacting garment having an upper portion which extends over the top line of the wearer, a back portion which extends over the rear of the wearer, said back portion having an opening for register with the root of the tail and the anal region of the wearer and supporting container means characterised in that the region of the wearer's body between the root of the tail and the anal region is kept clear of obstruction by the container means being supported only by the lower and lateral parts of the margin of the back portion opening and by one or both of: the upper part of the said margin passing around the top of the root of the tail, and; a portion of the wearer's tail spaced from its root.

According to another aspect of the invention there is provided a device to be worn on the body by an animal such as a dog, cat or the like, for receiving and retaining the discharge of body waste, said animal being a wearer of the device, and having a top line, a rear, an anal region at the rear, a tail with a root at the rear above the anal region, a genital region, a belly, hindlegs, and forelegs, said root having a top and said tail projecting rearwardly from said root, said device comprising: a wearer-contacting garment having an upper portion which extends over the top line of the wearer, and a back portion which extends over the rear of the wearer, and said back portion having one opening defined therein, said opening having a continuous periphery extending around an area of the rear of the wearer including the root of the tail and the anal region of the wearer; container means having at least one entrance opening defined therein to receive the discharge of body waste, said one entrance opening having a periphery connected to the periphery of said one opening of said back portion for supporting said container means on said back portion; and means connected to said wearer-contacting garment at selected regions, to fasten the garment tightly yet comfortably and securely around the body of the wearer said one opening of said back portion being of a size to encompass both the root of the tail and the anal region of the wearer, and said continuous periphery of said one opening of said back portion extending entirely around an area of the rear of the wearer including both the root of the tail and the anal region of the wearer, characterised in that said one entrance opening of said container means is of a size to encompass both the root of the tail and the anal region of the wearer, that said container means is shaped and dimensioned to at least partially laterally surround said one opening of said back portion and to extend over the top of the wearer's tail at least at a location spaced rearwardly of the root thereof, and that said periphery of said one entrance opening is connected as aforesaid to the periphery of said one opening of said back portion over an extent at least sufficient to encompass the anal region and opposed side portions of the root of the tail.

According to a further aspect of the invention there is provided a device to be worn on the body by an animal such as a dog, cat or the like, for receiving and retaining the discharge of body waste, said animal being a wearer of the device, and having a top line, a rear, an anal region at the rear, a tail with a root at the rear above the anal region, a genital region, a belly, hind legs, and forelegs, said root having a top and said tail projecting rearwardly from said root, said device comprising: a wearer-contacting garment having an upper portion which extends over the top line of the wearer, a back portion which extends over the rear of the wearer, said back portion having an opening at the rear and supporting first container means for receiving solid body waste discharged therethrough, a lower portion which extends over the genital region of the wearer, said lower portion having an opening defined therein of a size to extend entirely around the periphery of the genital region of the wearer, and second container means for fluid waste having a closed bottom and one entrance opening to receive the discharge of fluid body waste, said one entrance opening being of a size to extend entirely around the periphery of the genital region of the wearer, said second container means being connected to said lower portion along the periphery of said opening of said lower portion and means connected to said wearer-contacting garment at selected regions to fasten the garment tightly yet comfortably and securely around the body of the wearer, characterised in that the region of the wearer's body between the root of the tail and the anal region is kept clear of obstruction by the first container means being supported only by the lower and lateral parts of the margin of the back portion opening and by one or both of: the upper part of the said margin passing around the top of the root of the tail, and; a portion of the wearer's tail spaced from its root, and in that said second container means has means connected to said closed bottom to retain fluid waste.

The garment of the present invention has several preferred uses, i.e. as an integral disposable garment, as an integral reusable-washable garment, as an attachable reusable-disposable garment and as an attachable reusable washable garment. The above mentioned preferred uses of the garment are applicable to all the preferred embodiments, differing only in that in the attachable reusable-disposable garment, as well as in the attachable reusable-washable garment, the disposable pouches as well as the reusable-washable pouches are attached with fastening means to the reusable garment when in use, and detached after use to the disposed of, or to be washed and reused, respectively while in the other preferred uses the pouches are permanently affixed to the garment.

Specifically, the functions of receiving and retaining the discharge of solid and fluid body wastes of dogs, cats, mammals or the like, are accomplished by a garment -- primarily directed in the preferred exemplary embodiment described herein, to be worn by male and female dogs -- which in one aspect of the invention to be worn by male or female dogs alike comprises a wearer-contacting garment constituted by distinctive portions which are placed over selected anatomical regions of the wearer, and provided with one pouch to receive and retain solid body wastes having at least one entrance opening which encompasses both the root of the tail and the anal region of the wearer, and having a closed bottom wherein solid body wastes remain confined, and which in another aspect of the invention to be worn in some preferred embodiments by male dogs and in other preferred embodiments by female dogs, comprises a wearer-contacting garment constituted by distinctive portions which are placed over selected anatomical regions of the wearer, and provided with two pouches, one pouch to receive and retain solid body wastes as mentioned above, as well as with one pouch located over and around the genitalia of the wearer, having one entrance opening and a closed bottom and having an absorbent pad positioned therein to receive and retain fluid body wastes. The garment of the present invention in all its preferred embodiments is provided with adjustable straps, which might be plain, elasticized or of an elastic fabric, in several preferred embodiments, to fasten the garment tightly, yet comfortable and securely around the groins, the abdomen and the upper arms of the wearer, in several preferred embodiments, with several preferred fastening means.

In the disposable use of the garment, as well as in the attachable reusable-disposable use of the garment, the pouch to receive and retain solid body wastes is provided, in a preferred embodiment, with attachment means, and in another preferred embodiment, with occludent means, suitably located on the inner surface of the walls of the pouch near the aperture of the pouch and parallel to its edge, in order to close the aperture of the pouch, after removal of the garment and before discarding the garment in a garbage can. The pouches may also be sealed if desired, with commercially available twist ties or "key-lock" closures before discarding the garment in the garbage can.

The garment of the present invention, in all its preferred embodiments is so constructed, that it is easily placed on the wearer, by leaving the adjustable straps, or in some embodiments, the lower portion of the garment, unattached until the tail of the wearer is secured in the opening for the tail located on the back portion of the garment, with the pouch to receive and retain solid body wastes surrounding the tail, and in the embodiments further comprising a pouch to receive and retain fluid body wastes, until the pouch to receive and retain fluid body wastes is placed surrounding the respective genitalia of the wearer. With the garment in place as described above the adjustable straps, or in some embodiments the lower portion of the garment, provided with fastening means, are fastened to the upper portion of the garment, around the body of the wearer sufficiently tightly, yet comfortably, to prevent leakage outside the pouches of solid or fluid body wastes. In the attachable reusable-disposable use of the garment, as well as in the attachable reusable-washable use of the garment, the pouches are preferably attached to the garment before placing the garment on the body of the wearer to facilitate the application of the garment.

Following use, the garment is removed from the body of the wearer by detaching the adjustable straps, or in some embodiments the lower portion of the garment. Then, in the disposable garment as well as in the attachable reusable-disposable garment, the pouches to receive and retain solid body wastes are sealed with the attachment or occludent means provided inside the pouch and if desired with commercially available twist ties or "key-lock" closures, before discarding the garment in the garbage can, and in the reusable-washable garment, as well as in the attachable reusable-washable garment provided with attachable reusable-washable pouches, the feces are flushed down a water closet and the absorbent pad is removed from the pouch and discarded in the waste basket, at which point the garment and pouches may be washed and reused.

## Objects of the Invention

Accordingly, it is one of the major objects of the present invention to provide a new garment designed to be worn on the body by dogs, cats, mammals or the like provided with pouches for receiving and retaining the discharge of their solid and fluid body wastes, thereby preventing the soiling of outdoor and indoor areas of public places in urban centers, as well as the soiling inside the house, laboratory facilities, or the like.

It is another object of the present invention to provide, in one example, one pouch for solid body wastes.

It is another object of the present invention to provide, in another example, one pouch for solid body wastes as well as one pouch for fluid body wastes.

It is another object of the present invention to provide a pouch for solid body waste having at least one entrance opening of a size to encompass both the root of the tail and the anal region of the wearer.

It is another object of the present invention to provide a pouch for solid body waste which extends in some embodiments a suitable distance along and around the tail in a sleeve-like manner and in other embodiments, adapted to short tails, enclosing the tail completely, thereby avoiding in all embodiments any leakage of wastes outside the pouch.

It is another object of the present invention to provide a garment of the above character having a pouch to receive and retain fluid body wastes provided with an absorbent pad wherein the absorbent pad is positioned to receive and retain the discharge of fluid body wastes.

It is another object of the present invention to provide a garment of the above character which in a preferred use, having permanently affixed pouches, is adapted to be disposed of after each use.

It is another object of the present invention to provide a garment of the above character which in yet other preferred uses is adapted to be a reusable garment with attachable disposable pouches or with attachable reusable washable pouches.

It is another object of the present invention to provide a garment of the above character which in all the preferred uses is simple to construct and mass produce at low cost, and which is highly efficient and attractive.

## Brief Description of the Drawings

While the specification concludes with claims particularly pointing out and distinctly claiming the subject matter of the present invention, it is believed that the invention can be more readily understood from the following description taken in connection with the accompanying drawings, in which:

FIGS. 1, 2, 3, 42, 43, 44, 47, 49, 50, 54, 56, 57, 58, 61, 63, 64, 65, 68, 113, 114, and 120 through 124 are side views of preferred embodiments of the garment provided in one example with one pouch to receive solid waste and in another example provided with one pouch to receive solid waste and with one pouch to receive fluid waste. FIGS. 113 and 114 show the garment as adapted to be worn by cats.

FIGS. 4, 5, 13 through 27, 30, 31, 34, 35, 38, 39, 70, 71, 72, 74 through 79, 81, 83 through 96 and 125 are perspective views of preferred embodiments of the garment, adjustable straps, fastening means, pouches for solid waste and pouches for fluid waste.

FIGS. 6, 7, 8, 45, 51, 60, 67, 110 to 112, 115 and 117 are schematic views showing the garment and the adjustable straps seen from the rear and the underside of a wearer.

FIGS. 9 through 12, 28, 29, 32, 33, 36, 37, 40, 41, 46, 48, 52, 53, 55, 59, 62, 66, 69, 73, 80, 82, 116, 118 and 119 are plan views of the preferred embodiments of the garment, elasticized adjustable straps, pouches for solid waste, and pouches for fluid waste.

FIGS. 97 through 108 are schematic side views of different types of back and tails of different breeds of dogs.

FIG. 109 is a general view of a dog showing the different anatomical regions.

Detailed Description of the Preferred Embodiments

While this invention is susceptible of embodiment in many different forms, there is shown in the drawings and will herein be described in detail, preferred embodiments of the invention and modifications thereof, with the understanding that the present disclosure is to be considered as an exemplification of the principles of the invention, and is not intended to limit the invention to the embodiments illustrated. The scope of the invention will be pointed out in the appended claims.

The discussion that follows is primarily directed to the use of the invention as a garment to be worn by male and female dogs alike. While this is contemplated as being a preferred use, it should be understood that the garment of the present invention may also be adapted to be worn by cats and other mammals or the like, as it is hereinafter shown in an example given of a mode, in which the garment of the present invention may be adapted to be worn by cats. Thus, the detailed description of the garment and pouches, as well as the detailed description of its preferred uses as a disposable, or as a reusable-washable or as an attachable reusable-disposable, or as an attachable reusable-washable garment, will allow anyone skilled in the art to readily adapt the invention to the requirements imposed by different wearers.

The garment of the present invention to be worn by male and female dogs in the preferred embodiments described herein, has several preferred uses, i.e. as an integral disposable garment, as an integral reusable-washable garment, as an attachable reusable-disposable garment, and as an attachable reusable-washable garment. The abovementioned preferred uses of the garment are applicable to all the preferred embodiments of the garment differing only in that in the attachable reusable-disposable garment, as well as in the attachable reusable-washable garment, the disposable pouches, as well as the reusable-washable pouches, are attached with fastening means to the reusable garment when in use, and detached after use to be disposed of, or to be washed and reused respectively, while in the other preferred uses, the pouches are permanently affixed to the garment.

The integral disposable garment is preferably made of a flexible moisture impervious opaque polyethylene film, preferably matte and smooth or embossed with a fine pattern to provide a textile-like texture to the garment, of a suitable thickness preferably not less than 4 mils. The garment as well as the pouches are formed in a preferred embodiment preferably using two layers of polyethylene film, one for the backing layer and one for the facing layer, totalling a suitable thickness preferably not less than 8 mils, and in another preferred embodiment, the garment as well as the pouches are formed using one layer of polyethylene film for the backing layer and a soft moisture pervious porous non-woven bonded fibrous web for the facing layer, of a suitable thickness preferably not less than 4 mils, totalling a suitable thickness preferably not less than 8 mils.

And the integral reusable-washable garment is preferably made of a flexible moisture impervious opaque vinyl, polyvinil chloride (PVC) sheeting, preferably matte and smooth or embossed with a fine pattern to provide a textile-like texture to the garment, and preferably approximately between about 4 mils to 8 mils thick. The garment as well as the pouches are formed preferably using two layers, one for the backing layer and one for the facing layer of vinyl sheeting, totalling a thickness preferably of approximately between about 8 to 16 mils.

And in the attachable reusable-disposable garment, the reusable garment is preferably made of a soft fabric such as for example blue jean or cotton or corduroy or the like, although it may also be made of opaque vinyl sheeting, preferably matte and smooth or embossed with a fine pattern to provide a textile-like texture to the garment, and the attachable disposable pouches are preferably made of opaque polyethylene film and are formed in a like manner as for the integral disposable garment.

While in the attachable reusable-washable garment the reusable garment is analogous to the reusable garment mentioned above and the attachable reusable-washable pouches are preferably made of vinyl sheeting. Also, other suitable materials may be employed, for each one of the abovementioned preferred uses of the garment.

The garment of the present invention in its most preferred uses may be constructed employing several heat sealing techniques according with the specific plastic utilized, such as for example non-high frequency thermal sealing may be employed when using polyethylene film or HF Techniques may be employed when using sheets of soft polyvinyl chloride (PVC). Also adhesives well known to those of ordinary skill in the art, such as for example, double sided pressure sensitive adhesive tapes, hot melt glues, or other adhesives may be used to bond the different parts of the garment together. In addition, heat sealing techniques and adhesives could be used in association to bond together different features. Of course, any other equally suitable technique may also be employed.

The dimensions of the garment and pouches for solid and for fluid waste should be adapted to fit the different sizes imposed by different breeds of dogs, therefore there is intended a big size as well as a medium size and several small sizes of the garment to be worn by tall, middle, short, little and shrimpy breeds of dogs.

In addition, the garment is provided with adjustable straps to permit the garment to vary in size, to adapt to the different weights of the wearer within the same breed. Thus, in the preferred exemplary embodiments described herein and shown in the drawings, there are no given specific dimensions, since these are relative to the different breeds, thereby the portions of the garment are illustrated and described in relation with the different anatomical regions, which they covered, being this the unchangeable factor, while the sizes are relative to the different breeds.

All of the preferred embodiments of the garment and pouches may be worn by any breed of dogs, although some preferred embodiments of the garment as well as some preferred embodiments of the pouches are particularly suitable for some breeds more than for others, due to specific characteristics, such as types of back, setting of the tail and manner of carrying the tail as well as different types of tail, and long or docked tails. This will be pointed out later on, during the description of the embodiments.

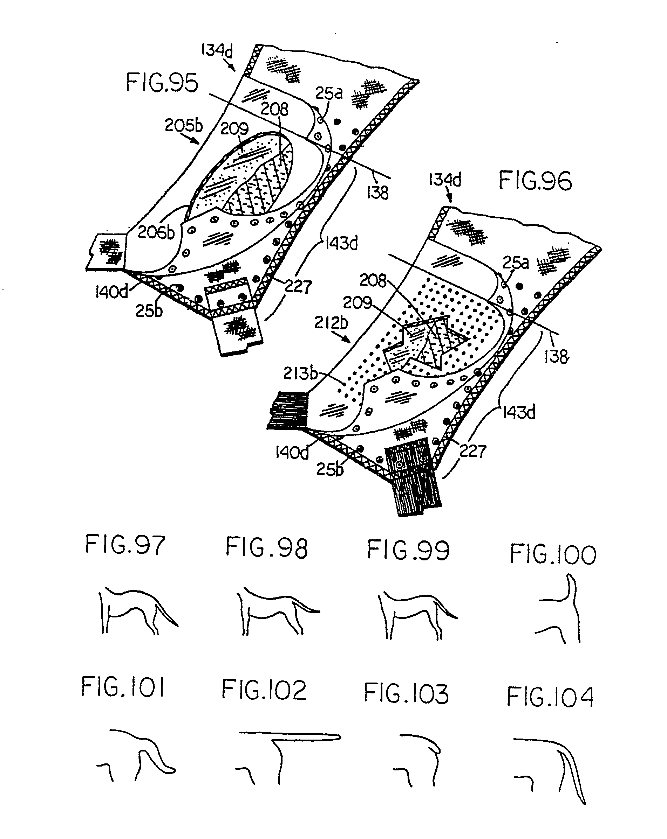

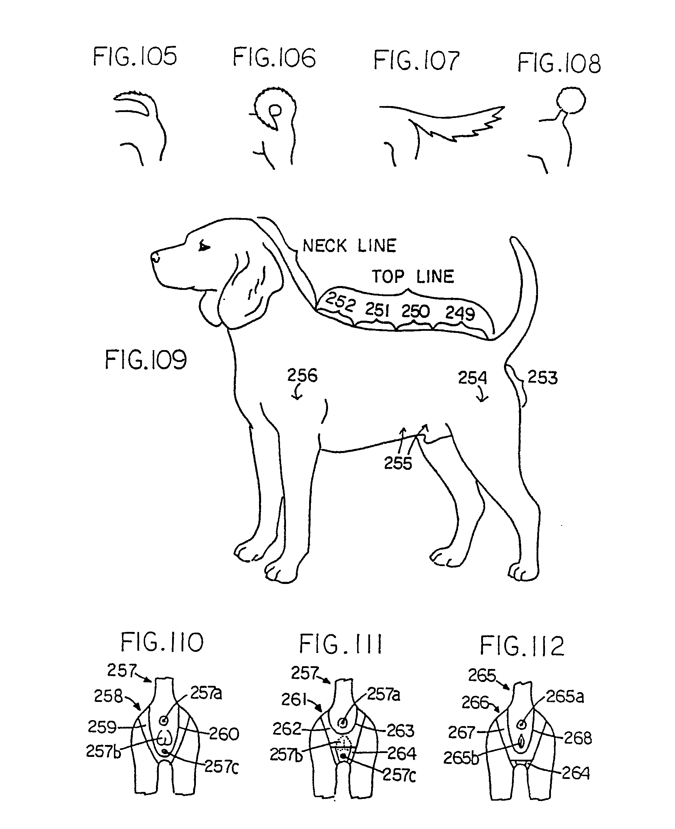

The anatomical regions of the male and female dogs referred to herein, covered by the portions of the garment, as well as the different types of backs and tails are illustrated in FIG. 109 and FIGS: 97 to 99 and FIGS. 100 to 108 respectively.

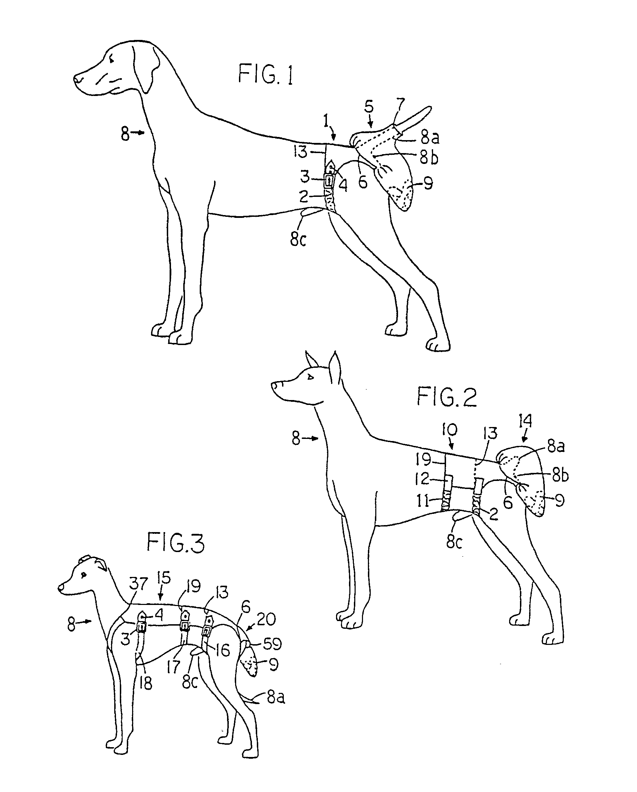

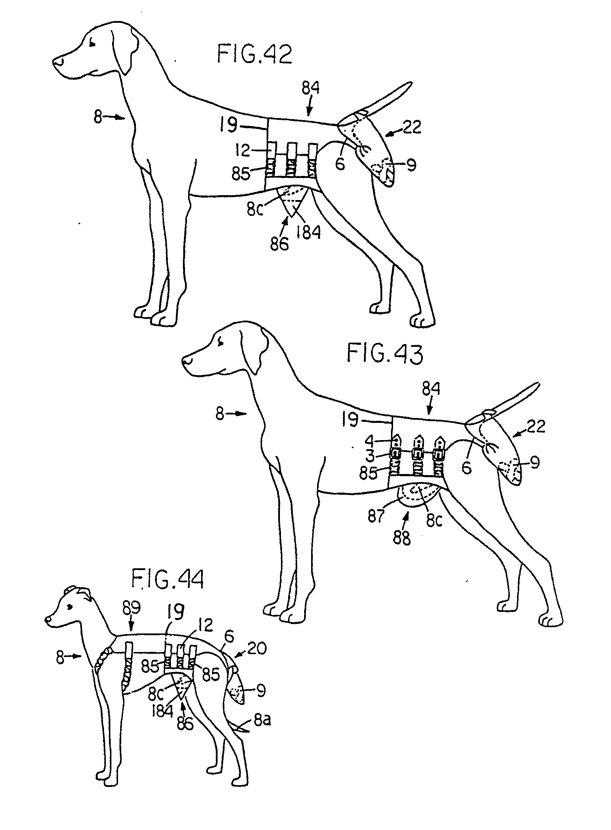

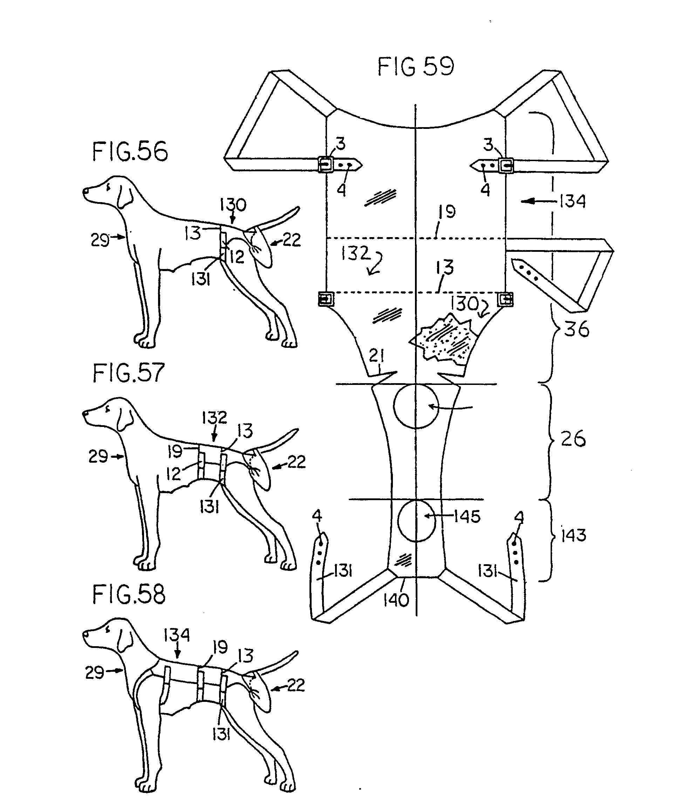

In one aspect, the present invention comprises, in several preferred embodiments, a garment provided with one pouch to receive and retain solid body wastes, to be worn by male and female dogs alike (FIGS. 1, 2, and 3) and in another aspect, the present invention comprises a garment provided with two pouches, one pouch to receive and retain solid body wastes, as well as with one pouch to receive and retain fluid body wastes, which in some preferred embodiments is to be worn by male dogs (FIGS. 42, 43, 44, 47, 49, 50 and 54) and in other preferred embodiments is to be worn by female dogs (FIGS. 56, 57, 58, 61, 63, 64, 65 and 68).

To illustrate the preferred exemplary embodiments of the wearer-contacting garment as well as the preferred exemplary embodiments of the pouches, dogs having medium long tails carried up or down or having short docked tails have been chosen. Reference to other types of tails and backs of dogs are made in the detailed description of the invention to point out the suitability of the different embodiments to these anatomical features.

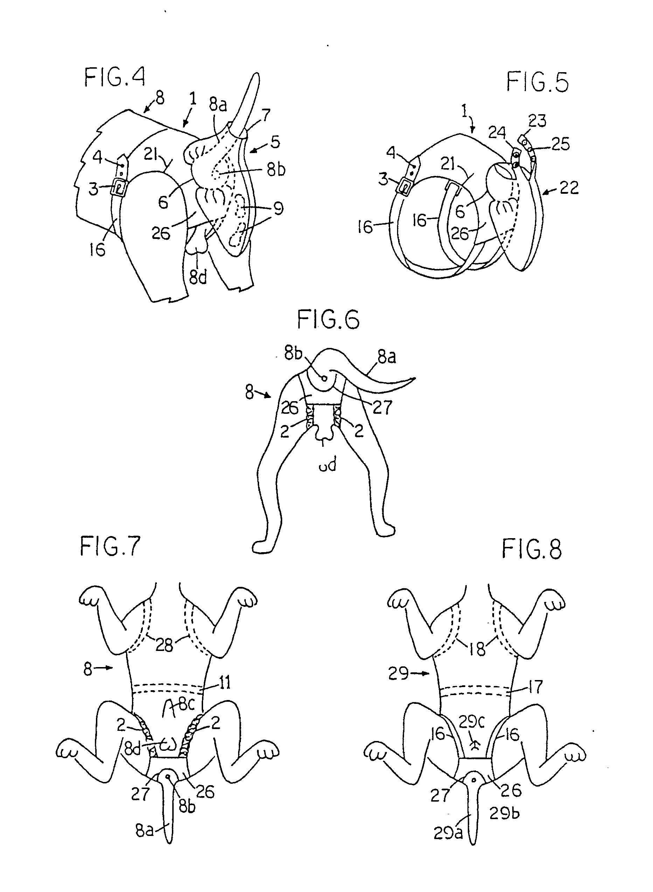

Referring now to FIGS. 1, 2 and 3, these general views illustrate the preferred embodiments 1, 10 and 15 of the garment provided with one pouch to receive and retain solid body wastes, as adapted to the disposable use and applied to a male dog 8. There are also shown some of the preferred embodiments of the pouch to receive and retain solid body wastes, namely the embodiments 5, 14 and 20 which will be described later. FIGS. 1, 2 and 3 also show in phantom the confinement within the closed bottom of the pouch, of solid body wastes 9, while FIG. 4 illustrates in phantom solid body wastes 9 falling into the pouch during the act of excreting.

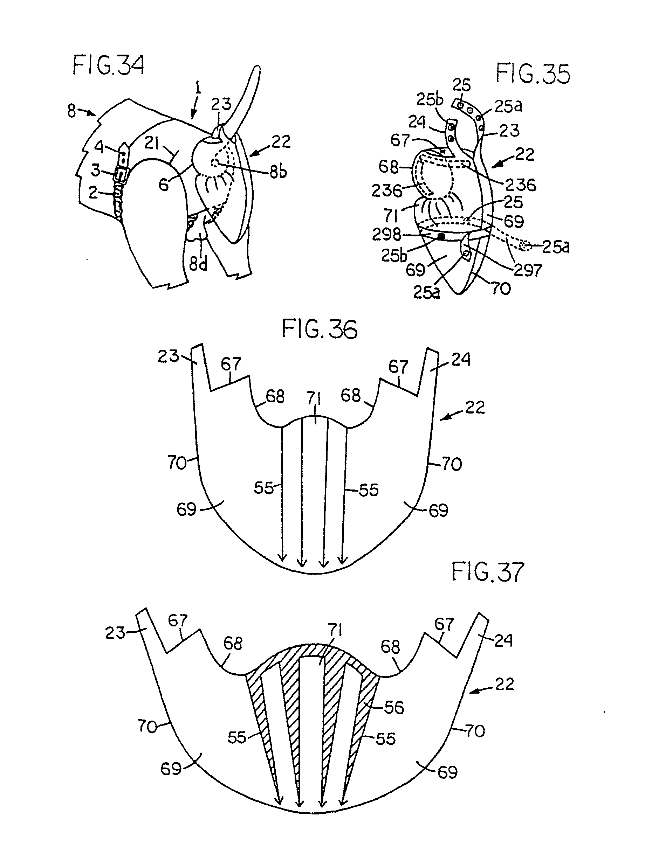

Any one of the preferred embodiments 1, 10 and 15 of the garment may be used in association with any one of the preferred embodiments 5, 14, 20 or 22 of FIGS. 34 and 35 of the pouch to receive and retain solid body wastes.

In a like manner, any one of the preferred embodiments of adjustable straps, i.e. adjustable plain or elasticized straps, and any one of the preferred embodiments of fastening means, i.e. a pressure sensitive tape fastener 12 or a buckle 3, may be applied to anyone of the embodiments 1, 10 and 15 of the garment adapted to be disposed of. The embodiments 1, 10 and 15 comprise a wearer-contacting garment and one pouch, permanently affixed to the garment.

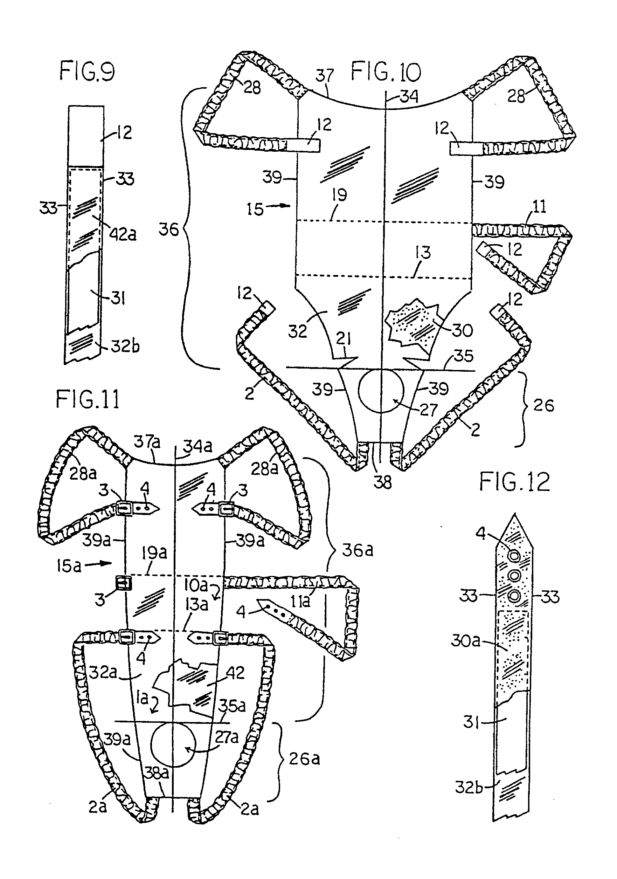

Basically, the wearer-contacting garment in the preferred embodiments 1, 10 and 15 is of the shape best seen in FIG. 10 and comprises an upper portion 36 (FIG. 10) which is placed over the top line of the wearer. The term "top line" as used herein shall include all or any one of the anatomical regions that are located on the top of the body of the wearer and extending from the root of the tail up to the base of the neck, and being opposite to the underside of the body of the wearer (see FIG. 109). The wearer-contacting garment comprises also a back portion 26 (FIG. 10) which is placed over the buttocks (see FIG. 6), extending backwards a suitable length. The same reference numerals are used to designate the upper portion as well as the back portion of the garment in the most preferred embodiments 1, 10 and 15 respectively, since the upper portion is similar in these embodiments, except for its length along the top line of the wearer, while the back portion is analogous in the abovementioned embodiments. On the other hand, the front end of the upper portion in ech embodiment is designated with a different numeral and indicated by dotted lines, to show the different length of the upper portion in the different embodiments. The upper portion 36 as well as the back portion 26 will be described in detail in reference to FIG. 10.

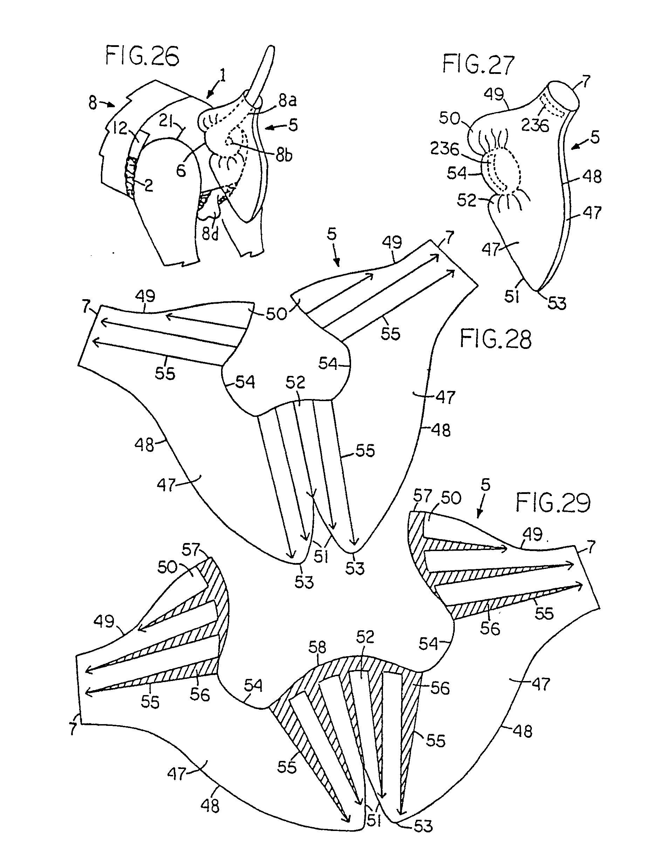

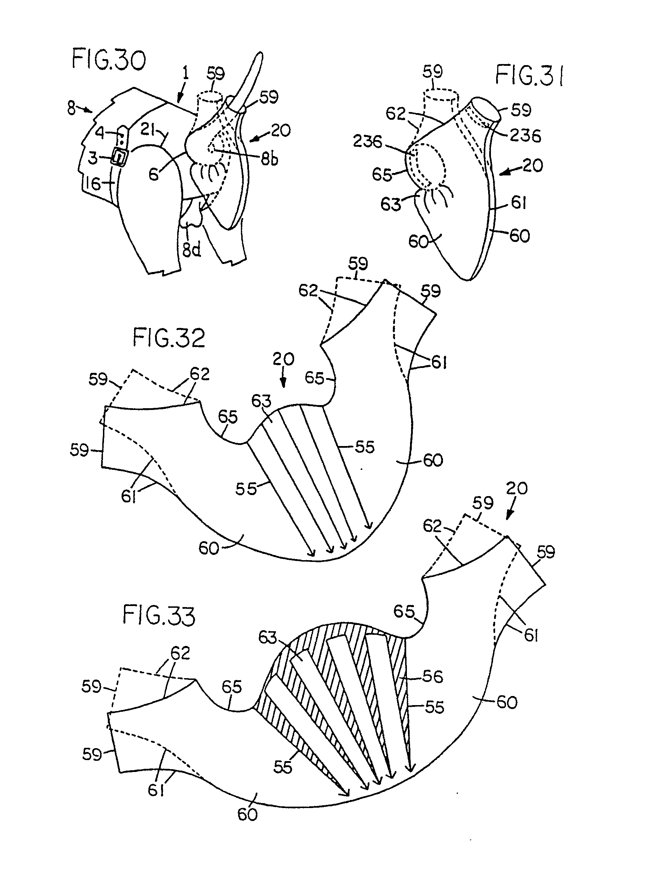

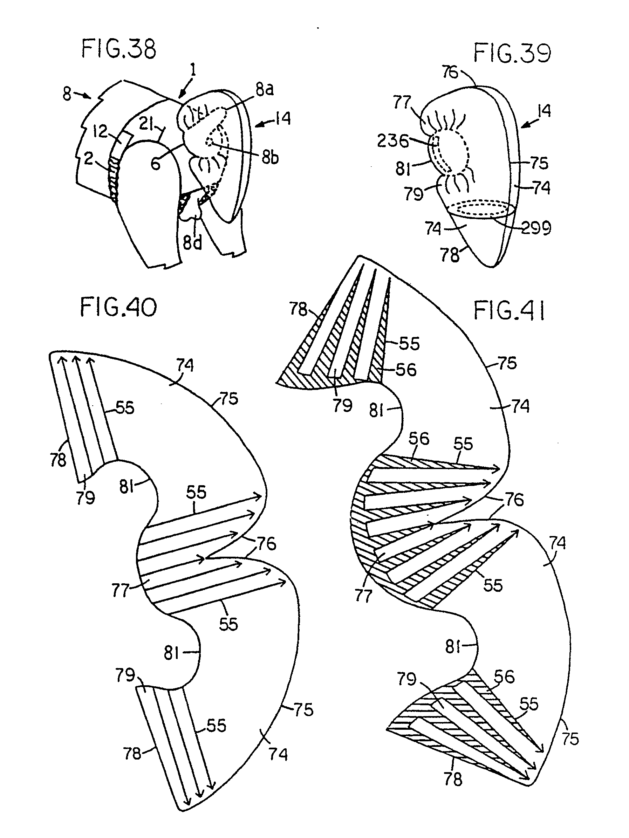

In the embodiment 1 of FIG. 1 the upper portion 36 is placed generally over the croup 249 of the wearer, see FIG. 109 for the anatomical regions. In the embodiment 10 of FIG. 2 the upper portion 36 is placed generally over the croup 249 and the loin 250, with dotted lines 13 indicating the front end 13 of the upper portion 36 on the top line of the wearer in the embodiment 1. And in the embodiment 15 of FIG. 3 the upper portion 36 is placed generally over the croup 249, the loin 250, the back 251 and the withers 252, i.e., over the complete top line of the wearer, with dotted lines 13 and 19 indicating the front ends 13 and 19 of the upper portion 36 on the top line of the wearer in the embodiments 1 and 10 respectively. In the preferred embodiments 1, 10 and 15 the back portion 26 of the wearer-contacting garment, which is placed over the buttocks 253 of the wearer, has an opening 27 (FIG. 10) defined therein, immediately below the upper portion 36, of a size to provide adequate room for the root of the tail and the anal region of the wearer. The pouch to receive and retain solid body wastes is provided in the preferred embodiments 5 (FIGS. 26 and 27),20 (FIGS. 30 and 31), and 22 (FIGS. 34 and 35) to be worn by dogs with medium and long tails, with an entrance opening which encompasses both the root of the tail and the anal region, as well as with an opening for the tail to come out from the pouch, while in the preferred embodiment 14 (FIGS. 38 and 39) to be worn by dogs with short or docked tails, the pouch is provided only with one entrance opening. The entrance opening of the pouch in all the preferred embodiments 5, 20, 22 and 14 is of a size corresponding to the size of the opening 27 located on the back portion 26 of the garment, in order to be aligned with it, when the pouch is affixed at 6 (FIGS. 1, 2 and 3), on the outer surface of the back portion 26, along the periphery of its entrance opening to the periphery of the opening 27 located on the back portion of the garment, preferably using heat sealing, although adhesive or the like may also be employed. The preferred embodiments 5, 20, 22 and 14 of the pouch to receive and retain solid body wastes, as well as the portions of the wearer-contacting garment, will be described later in more detail.

Referring now to the number of adjustable straps and their location around the body of the wearer in the preferred embodiments 1, 10 and 15 of FIGS. 1, 2 and 3 (see also FIGS. 7 and 8) in the preferred embodiment 1 of FIG. 1, the garment comprises two adjustable straps that pass over the groins and surround the upper thighs 254 of the wearer, defining hind legs openings, when fastened to the upper portion 36, while in the preferred embodiment 10 of FIG. 2 the garment has three adjustable straps, two around the groins and upper thighs 254, and one that passes over the abdomen 255 of the wearer defining a belly-band to fit the garment to the body of the wearer, and in the preferred embodiment 15 of FIG. 3, the garment is provided with five adjustable straps, two around the groins and upper thighs 254, one around the abdomen 255 and two that pass around the upper arms 256 of the wearer, defining forelegs openings when fastened to the upper portion 36.

The embodiments 1 and 10 are particularly suitable to be worn by dogs with straight or substantially straight loin 250 and croup 249 (see FIGS. 1 and 2), or with sway back (see FIG. 98) or with backs higher at croup 249 than at withers 252 (see FIG. 99), and the embodiment 15 is particularly suitable to be worn by dogs with roach back (see FIG. 97) like the Italian Greyhound or the like (see also FIG. 3), or in general by dogs with a sloping loin 250 and croup 249, or croup 249.

In all the preferred embodiments of the garment of the present invention, different numerals have been used to designate the adjustable straps according with their location around the body of the wearer, in each of the preferred embodiments of adjustable straps.

FIG. 1 illustrates the preferred adjustable elasticized straps 2 that surround the groins of the wearer, provided with eyelets 4, placed at the free end of the strap, to be engaged to a buckle 3 which is secured to the lateral edges of the upper portion 36 of the garment (see also FIG. 11). FIG. 2 shows the adjustable elasticized straps 2 and the adjustable elasticized strap 11 which surrounds the abdomen of the wearer, provided with a pressure sensitive tape fastener 12 placed at the free end of the strap and fastened to the lateral edges of the upper portion 36 (see also FIG. 10). And FIG. 3 illustrates the preferred adjustable plain straps 16, surrounding the groins, 17 surrounding the abdomen and 18 surrounding the upper arms 256 of the wearer provided with eyelets 4 to be engaged with a buckle 3 to the upper portion 36 of the garment. Also FIG. 5 illustrates the adjustable plain strap 16 and the embodiment 1 of the garment in its configuration as applied to the wearer showing another preferred embodiment 22 of the pouch to receive and retain solid body wastes. FIGS. 7 and 8 show the underside of a male dog 8 and a female dog 29 respectively, illustrating the location of the adjustable elasticized and plain straps of the preferred embodiments 1, 10 and 15, with the location of the straps of the embodiments 10 and 15 shown in phantom. There is also shown the relationship of the back portion 26 as well as the location of the straps, to the anatomical parts of the male dog 8 (tail 8a, anus 8b, testicles 8d, and penis 8c) and female dog 29 (tail 29a, anus 29b, and vulva 29c).

Turning now to FIG. 10, this plan view illustrates the preferred embodiment 15 of the garment of FIG. 3 showing a longitudinal center line 34 and a lateral line 35. The upper portion 36 is that part of the garment from the lateral line 35 to the front end 37 of the garment. The back portion 26 is that part of the garment from the lateral line 35 to the back end 38 of the garment. Dotted lines 13 and 19 indicate the front ends 13 and 19 of the upper portion 36 on the top line of the wearer in the embodiments 1 (FIG. 1) and 10 (FIG. 2) respectively, since it was deemed unnecessary to show the plan view of the embodiments 1 and 10 in separate figures. In the embodiments 1, 10 and 15 the upper portion 36 has a suitable width so as to cover the top line of the wearer extending laterally generally half way over the sides of the body of the wearer. Thus, the upper portion 36 is wider than the back portion 26, and is preferably provided with darts 21 immediately above the back portion 26, in order to adapt the fitting of the upper portion to the different croups of the different breeds of dogs. As it has been mentioned before, the upper portion 36 in the preferred embodiment 1 (FIG. 1) is placed generally over the croup 249, while in the embodiment 10 (FIG. 2) it is placed generally over the croup 249 and the loin 250, and in the embodiment 15 (FIGS. 3 and 10) it is placed generally over the croup 249, the loin 250, the back 251 and the withers 252, i.e. over the complete top line of the wearer. The back portion 26 is placed over the buttocks 253 and has a suitable width, extending backwards a suitable length as needed in order to serve as support for the adjustable straps, which are secured at both ends of the back end 38 of the garment. The back portion 26 has an opening 27 defined therein immediately below the lateral line 35, of a size to provide adequate room for the root of the tail and the anal region of the wearer and the lateral edges 39 and the back portion 26 gets suitably narrower from the lateral line 35 towards the back end 38. The lateral edges 39 are incurved above the upper thighs 254 of the wearer. The front end 37 is generally curved inwards to surround the neck of the wearer. The preferred embodiment 15 shown in FIG. 10 is provided with adjustable elasticized straps 2, 11 and 28 having at their free ends a pressure sensitive tape fastener 12. The straps 2 are to be engaged to the upper portion 36 below the front end 13 and the strap 11 below the front end 19. The straps 28 are located at the corners formed by the front end 37 with the lateral edges 39. The adjustable elasticized or plain straps should have a suitable width to be comfortable to the wearer.

FIG. 11 illustrates another preferred exemplary embodiment of the garment similar to the embodiment illustrated in FIG. 10 but with narrower upper and back portions so that similar reference numerals, accompanied by a letter, to indicate the aforementioned differences, are used to designate those elements in FIG. 11 which correspond with those in FIG. 10. In the embodiment 15a, the upper portion 36a does not extend laterally over the sides of the body of the wearer.

In a preferred embodiment the backing layer 32 (FIG. 10) and 32a (FIG. 11) and the facing layer 42 (FIG. 11) are both preferably made of a flexible moisture impermeable opaque polyethylene film. It is preferred that the opaque polyethylene film be of suitable colors, although if desired it could also be white. In another preferred embodiment the backing layer 32 (FIG. 10) and 32a (FIG. 11) is made of polyethylene film as described above and the facing layer 30 (FIG. 10) is made of a suitable soft porous non-woven bonded fibrous web. The backing layer and facing layer described above also apply to the preferred embodiments 5, 20, 22 and 14 of the pouch for solid body wastes. The backing layer 32 and 32a and the facing layer 30 or 42 of embodiments 1, 10 and 15, or 1a, 10a and 15a of the garment are bonded to each other preferably by heat sealing or if desired by an adhesive or the like and preferably over the entire interface between them or, if desired, only along their periphery.

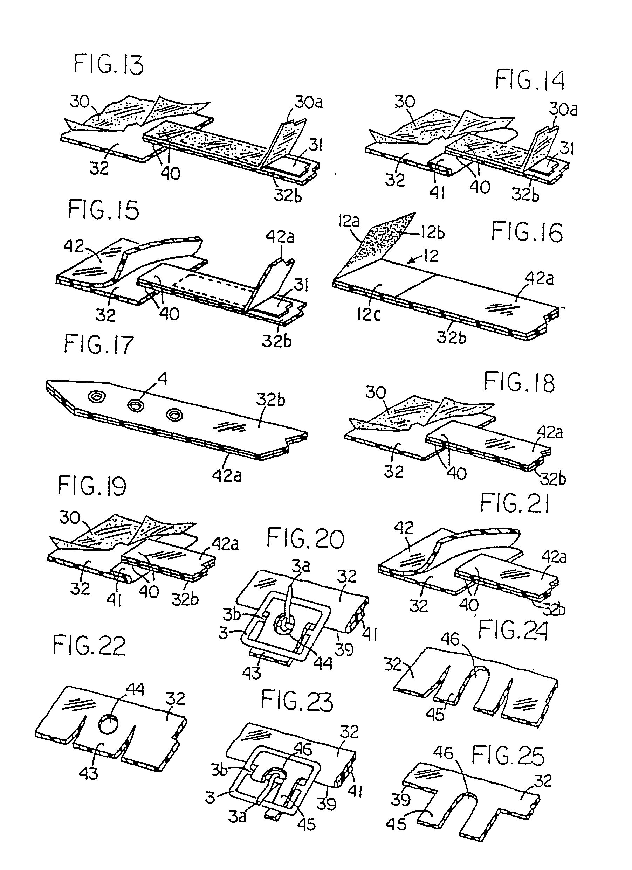

While the adjustable straps are secured to the garment, preferably by sandwiching one end of the adjustable straps between the backing layer and the facing layer (See FIGS. 13 to 15 and 18, 19 and 21) and preferably heat sealing the adjustable straps at 40 to the margins of the garment or if desired bonding them to the margin of the garment with adhesives, or the like.

Referring now to FIGS. 9 and 12, these figures illustrate a fragmentary plan view of the underside of the adjustable elasticized straps comprising a backing layer 32b made of the previously described polyethylene film used for the garment, an elastic member 31 for the purpose of providing an elasticized contractable adjustable strap, and a facing layer 42a (FIG. 9) made in a preferred embodiment of the abovementioned polyethylene film or a facing layer 30a (FIG. 12) made in another preferred embodiment of the previously described soft porous non-woven bonded fibrous web used for the facing layer 30 (FIG. 10) of the garment. In addition, the adjustable elasticized straps are provided on their free end in a preferred embodiment shown in FIG. 9 with a fastening tape 12 or, in another preferred embodiment shown in FIG. 12, with a plurality of metal or plastic rimmed eyelets affixed to the free end of the adjustable strap by inserting them by pressure, or by any other suitable way. The adjustable elasticized straps comprising a facing layer, made of polyethylene film, are best used in association with the garment comprising a facing layer made of polyethylene film and the straps comprising a facing layer made of a non-woven bonded fibrous web are best used in association with the garment comprising similar facing layers.

The fastening tape 12 shown in FIG. 9 is preferably refastenable and can be any of those well known to those skilled in the art. The tapes 12 have a fixed end 12c secured to the free end of the adjustable elasticized straps and a free end wherein the adhesive surface 12b, illustrated in FIG 16, is covered with a facing layer 12a.

The elastic member 31 is sandwiched between the backing layer 32b and the facing layer 42a or 30a of the adjustable strap and is operatively associated with the adjustable strap in an elastically contractable condition so that in a normally unrestrained configuration, the elastic member 31 effectively contracts or gathers the adjustable straps material, therefore providing an elasticized contractable adjustable strap with contractable lateral edges 33. The elastic member 31 can be operatively associated with the adjustable strap in an elastically contractable condition in at least two ways, i.e. stretch the elastic member to its stretched condition and fix it to the adjustable strap while the adjustable strap is in an uncontracted or stretched condition, or contract the adjustable strap--for example, by pleating it -- and fix the elastic member to the contracted adjustable strap while the elastic member is in its relaxed or unstretched condition. The elastic member 31 should have a suitable tensional force in order to exert a suitable contact pressure to provide continued contact with the body of the wearer at the previously mentioned locations, thereby preventing any leakage of solid body wastes outside the pouch. It is preferred that the elastic member be an elastic tape made from natural rubber. The elastic member 31 is preferably slightly narrower than the adjustable straps in order to leave suitable margins on each side of the adjustable strap and extends lengthwise the adjustable straps, except in the area where the fastening tape 12 or eyelets 4 are located as shown in FIGS. 9 and 12 respectively. The elastic member 31 is operatively associated with the adjustable straps by securing it to the backing layer 32b, the facing layer 42a or 30a, or to both the backing and facing layers, with an elastic attachment means. This elastic attachment means should be flexible and of sufficient adhesiveness to hold the elastic member 31 in its stretched condition substantially indefinitely. A suitable attachable mean could be for example a double sided transfer tape which is compatible with the material of the elastic member. Other flexible adhesives compatible with the elastic member could also be used as the attachment means. The elastic member 31 has an effective length equal to its stretched length and when contracted is shorter in length than the portion of the adjustable straps to which it is secured and therefore tends to gather the backing and facing layers of the adjustable straps, although the adjustable straps may be stretched lengthwise due to the resiliency of the elastic member, when putting the garment on the wearer. The elastic member 31 is preferably secured to the adjustable straps along its entire length, although, if desired, the elastic member may be attached, for example, only at its two ends and be operatively associated for the remainder of its length by extending through a sleeve within the adjustable strap or by loops integral with the adjustable strap.

FIGS. 20 and 22 to 25 illustrate some modes in which the buckle 3 made of disposable plastic or metal may be secured to the lateral edges of the garment in any one of its preferred uses with a flap 43 having a hole 44 to pass the prong 3a of the buckle 3 and wrapping the flap 43 around the center bar 3b. FIGS. 23 and 24 illustrate two flaps 45 separated by a "U" shaped opening 46 forming a hem 41.

The preferred modes described herein of securing the adjustable straps and the buckle to the marginal edges of the garment may be subject in practice to modifications and adjustments whenever convenient. Of course, any other suitable fastening means could also be employed.

Referring now to the preferred embodiments of the pouch to receive and retain solid body wastes, all the preferred embodiments 5, 20, 22 and 14 of the pouch may be used in association as previously mentioned, with any one of the preferred embodiments 1, 10 and 15 or 1a, 10a or 15a of the garment. This also applies to the preferred embodiments of the garment further comprising a pouch to receive and retain fluid body wastes, which will be described later.

In the description that follows there are given examples of a mode, shown in the plan views of the drawings, in which each one of the preferred embodiments of the pouch may be constructed and which could be subject in practice to modifications and adjustments whenever convenient. Of course, any other way of constructing the pouch in each of the embodiments may also be employed and any other suitably shaped pouch may also be used, besides the embodiments described herein, provided that the pouch functions in a like manner and fulfills the objective.

In addition, the plan views of the preferred embodiments of the pouch are only exemplary and illustrative and do not intend to represent the actual proportions and dimensions of the pouch, which should be adapted in practice to the different breeds of dogs and to the different tail settings, etc.

The different parts of the pouch in all its preferred embodiments, as well as the backing layer and the facing layer may be bonded together preferably by heat sealing, although adhesives or the like may also be employed.

In general, the pouch in all the preferred embodiments comprises a top portion which is the part of the pouch that, in some preferred embodiments having a hole defined therein for the tail to come out, surrounds the tail laterally and that in other preferred embodiments covers the tail, a closed bottom, a back portion which is the part of the pouch with a hole defined therein for the root of the tail and the anal region and along which the pouch is affixed at 6 to the back portion of the garment, and a front portion which is the part of the pouch opposite to the back portion. These portions are best seen in FIGS. 26, 30, 34 and 38 which illustrate the pouch and garment as applied to a male dog. The pouch in all its preferred embodiments should have a suitable length in order to provide enough room for the solid body wastes. All the preferred embodiments of the pouch are preferably provided in a preferred embodiment with attachment means and in another preferred embodiment with occludent means. The attachment means as well as the occludent mens are located on the inner surface of the walls placed near the openings of the pouch and parallel to their edges in order to seal the openings of the pouch affixed to the garment adapted to be disposed of, before discarding the garment in the garbage can. The attachment means are for example strips of pressure sensitive adhesive covered with a protective removable backing paper which is peeled off after removal of the garment in order to seal the openings of the pouch. And the occludent means may be any of those occludent means well known to those skilled in the art, such as the occludent means comprising interlocking rib and groove elements disclosed in U.S. Patent No. RE. 28,969 reissued to Naito on Sept. 21, 1976, said patent being hereby incorporated herein by reference. The pouch could also be sealed if desired, without attachment means or occludent means, with commercially available twist ties or "Key-lock" closures before the garment is discarded in the garbage can.

Turning now to FIG. 27, the preferred embodiment 5 of the pouch shown in this figure comprises two walls 47 and a closed bottom 53. The preferred embodiment 5 of the pouch has an entrance opening 54 for the anal region and the root of the tail, located at the back of the pouch on one side of the walls 47, of a size to provide adequate room for the root of the tail and the anal region of the wearer and corresponding to the size of the opening 27 (or 27a) located on the back portion 26 (or 26a) of the garment, in order to be aligned with it when the pouch is affixed at 6 on the outer surface of the back portion 26 (or 26a) along the periphery of its opening to the periphery of the opening 27 located on the back portion of the garment, preferably using heat sealing, although adhesives or the like could also be employed. Basically, the pouch is affixed along the opening for the root of the tail and the anal region in a similar manner as a sleeve is affixed around an armhole. The top portion of the pouch in the preferred embodiment 5 has a sleeve-like shape preferably oriented in an oblique outward direction and has an opening 7 defined therein being of a size to provide adequate room for the tail to come out from the pouch. The sleeve-like shaped top portion of the pouch in the preferred embodiment 5 extends along the tail a suitable length, so as to establish a suitable distance between the two openings 54 and 7 sufficient to prevent any leakage of solid body wastes during and after the act of excreting. As indicated previously, the preferred embodiment 5 preferably has a puff 52 below the opening 54 and a puff 50 above the opening 54 to add more amplitude to the pouch, although, all and any one of the pouches 5, 20, 22 and 14 may also be constructed without puffs. The walls 47 of the pouch are sealed together to form a front seam 48, a top seam 49, and a back seam 51. The embodiment 5 of the pouch is suitable for different types of tails and tail settings. Two narrow strips of pressure sensitive adhesive 236, shown in phantom, are provided to seal the openings 54 and 7 after the disposable garment has been removed from the wearer and before discarding it in the trash basket.

FIGS. 28 and 29 illustrate the plan views of the preferred embodiment 5 of the pouch, and show a mode in which the pouch may be constructed by tracing designer lines 55 directed towards the opening 7 and towards the bottom 53 of the pouch, along the areas best seen in FIG. 28, in order to form the puffs 50 and 52. To construct the puffs 50 and 52, designer lines 55 are cut and spread evenly adding paper 56 (shown in shade) as exemplified in FIG. 29. Preferably, curves 57 and 58 are added at the edge of the puffs 50 and 52 respectively, to give an extra amount of blousing to the puffs. The embodiment 5 illustrated in FIGS. 28 and 29 has the back portion cut as one piece with a short steam of dart 51. If desired, the pouch may also be cut in any other suitable way.

The description given herein to construct a puff is also applicable to figures 32, 33, 36, 37, 40 and 41, in a like manner, the embodiments 20, 22 and 14 may be also cut in any other suitable way.

FIGS. 30 and 31 illustrate the preferred embodiment 20 of the pouch which is similar to the embodiment 5 except for not having a puff above the opening 65, and also for the fact that the top portion in this embodiment 20 is constructed at different angles, adapted to the position of the wearer's tail. For example, tails carried always up or bent acutely forward, or tightly curled upwards as illustrated in FIGS. 100, 105 and 106 respectively, or tails carried always down (FIG. 104) or horizontally (FIG. 102), or cranked tails as shown in FIGS. 101, etc. Therefore, the top portion in this embodiment 20 is adapted to the different positions of the different tails and preferably to an upright position and to an oblique position of the tail. FIGS. 30 and 31 show the preferred positions of the top portion of the pouch, a generally upright position shown in phantom, and an oblique position, the latter also adapting suitably to a large scope of tail settings, tails carried down or up, because of the degree of inclination of the angle and because of the flexibility of the plastic film used to make the pouch. In addition, if desired, the top portion of the pouch could also be constructed having a wider angle of inclination, to adapt to a lower position of the tail. Also shown walls 60, opening 65 and opening 59 and puff 63. The sleeve-like shaped top portion also extends a suitable distance along the tail and the walls are sealed together to form a front seam 61 and a top seam 62.

FIGS. 34 and 35 illustrate the preferred embodiment 22 of the pouch which is similar to the embodiments 5 and 20 except for a different top portion which in this embodiment is provided with adjustable straps 23 and 24. Preferably integral to each one of the two walls 69 and preferably located at the front on the top of the pouch, where the walls of the pouch meet, the adjustable straps 23 and 24 have a plurality of snap fasteners 25, and male fasteners 25a are adapted to engage with female fasteners 25b. While snap fasteners are preferred, any other type of separable fasteners may also be employed. Also shown are openings 67 and 68, front seam 70 and puff 71.

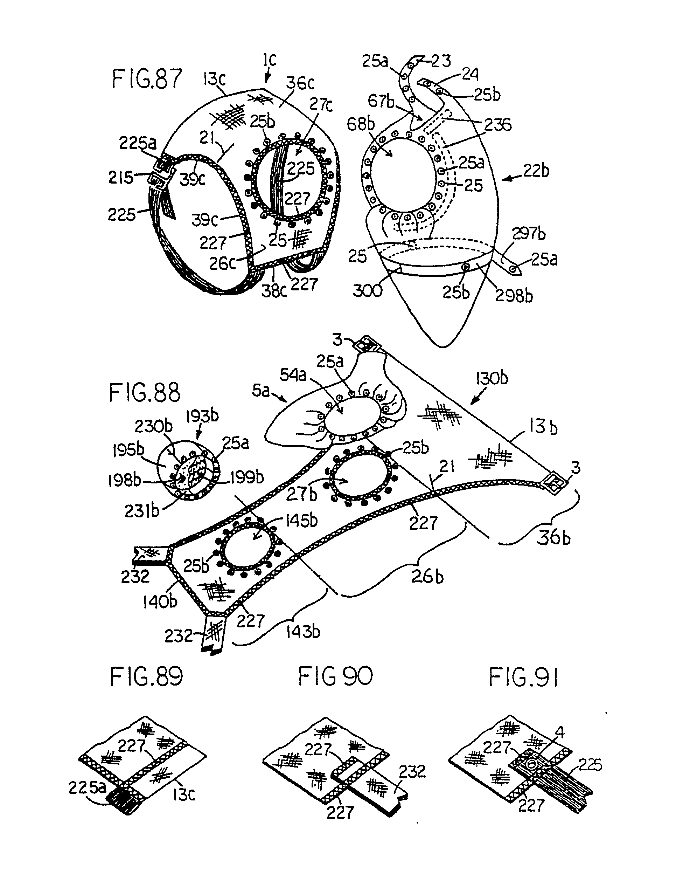

In addition, the embodiment 22 as well as the preferred embodiments 5, 20 and 14 (FIG. 39) of the pouch are provided in another preferred embodiment with two adjustable straps 297 and 298 (shown in FIG. 35) placed outside the pouch and located transversally to the pouch at a suitable distance from the bottom of the pouch. The two adjustable straps being bonded preferably by heat sealing, or using adhesives, or the like, at the center of the back of the pouch (as best seen in FIG. 87) and fastened at the front with generally two pairs of complementary snap fasteners 25a and 25b which are suitably located to fasten the adjustable straps mainly at two positions, loose or tight around the pouch to provide a belt to be fastened loose before excretion, and tight after excretion, before discarding the garment in a garbage can.

If desired, the adjustable straps may be fastened with a knot instead of with separable snap fasteners.

FIGS. 38 and 39 illustrate the preferred embodiment 14 of the pouch. The top portion in this embodiment 14 is closed, i.e. without an opening for the tail to come out, since this embodiment is intended to fit specifically docked tails as shown in FIGS. 2 and 38, or stump tails (FIG. 103), or short tails in general. To form the pouch shown in FIG. 39, the walls 74 are sealed together to form a front seam 75, a seam 78 and a seam 76.

Also shown opening 81, puffs 77 and 79 respectively and strip of adhesive 236, shown in phantom in FIG. 39.

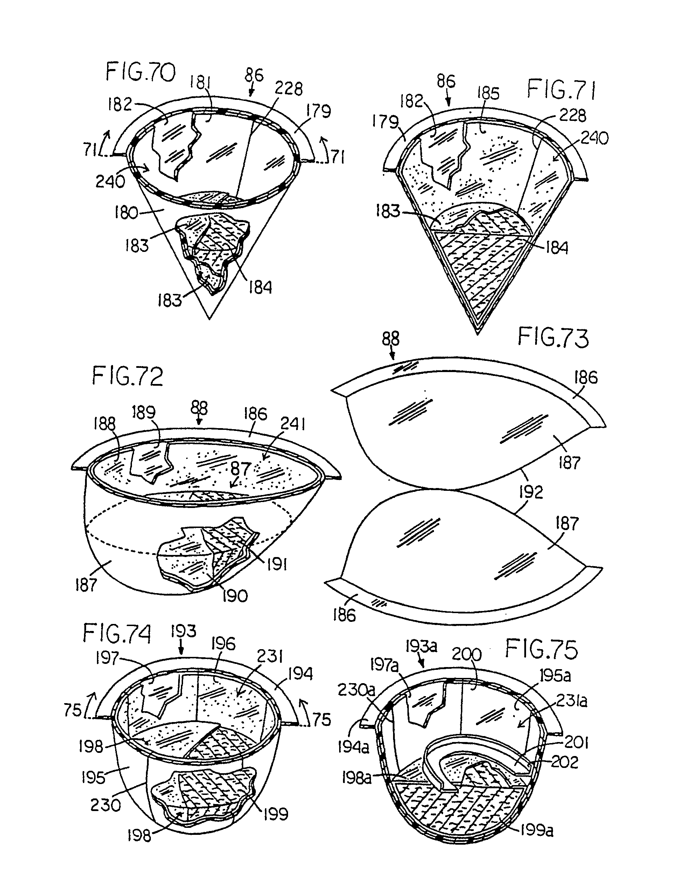

The embodiment 14 as well as the previously described embodiments 5, 20 and 22 of the pouch are provided in another preferred embodiment with an integral flange 299 shown in phantom in FIG. 39, which has a suitable width, placed transversally within the pouch along its periphery, being laterally inwardly projected and located at a suitable distance from the bottom of the pouch. The flange is preferably provided with an integral rim with a suitable height in order to facilitate the bonding of the flange to the pouch. The flange forms a pocket inside the pouch, within which, solid body wastes remain enclosed. The abovementioned flange provided in the disposable use of the garment is also applicable to the other preferred uses of the garment which will be hereinafter described. For illustrative purposes, see the flange 201 (FIG. 75), since the flange 201 is similar in every respect to the flange 299.

The adjustable straps 297 and 298 (FIG. 35) and the flange 299 (FIG. 39) are preferably provided to the pouch separately, since both embodiments intend to fulfill the same objective, although, if desired, both embodiments may be provided together to the pouch.

In all the preferred embodiments of the pouch to receive and retain solid body wastes, the opening for the anal region and root of the tail is preferably provided with an integral laterally outwardly projected flat flange, with a suitable width and located peripherally about the edge of the opening, to facilitate the bonding of the pouch along the periphery of the hole located on the back portion of the garment. For illustrative purposes see the flange 179 shown in the embodiment of the pouch to receive and retain fluid body wastes shown in FIG. 70.

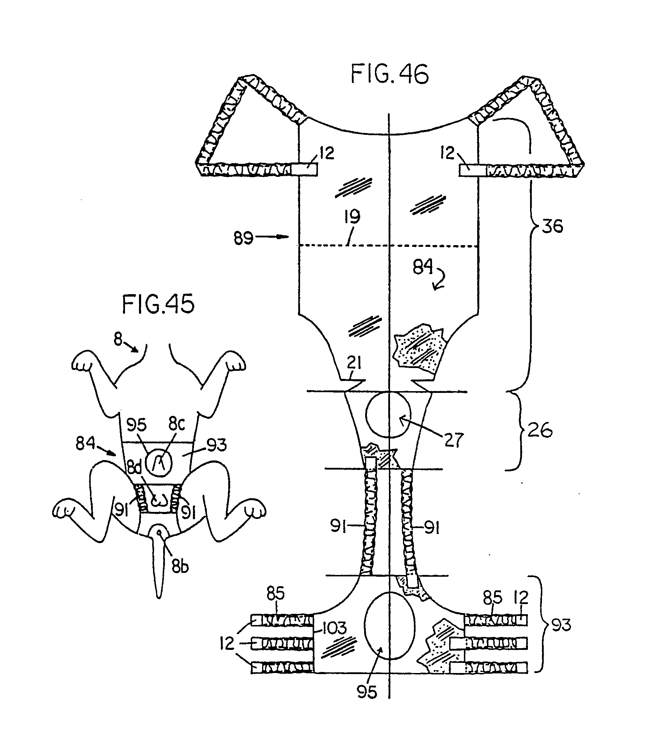

Referring now to the preferred exemplary embodiments of the garment adapted to be disposed of, provided with one pouch to receive and retain solid body wastes as well as with one pouch to receive and retain fluid body wastes, which in some preferred embodiments is to be worn by male dogs as illustrated in FIGS. 42, 43, 44, 47, 49, 50 and 54, and in other preferred embodiments is to be worn by female dogs as illustrated in FIGS. 56, 57, 58, 61, 63, 64, 65 and 68, basically the upper portion and back portion of the garment in the abovementioned embodiments, are analogous, and are placed over analogous anatomical regions of the wearer, to that already described in connection with the embodiment 15 of FIG. 10 (including also the embodiments 1 and 10) and with the embodiment 15a of FIG. 11 (including also the embodiments 1a and 10a). See FIGS. 46, 48, 52 and 55 showing the preferred embodiments to be worn by male dogs and FIGS. 59, 62, 66 and 69 to be worn by female dogs. In a like manner the backing and facing layers of the garment, as well as the adjustable elasticized or plain straps and the preferred modes of securing the straps and fastening means, to the garment in the abovementioned embodiments, are analogous to that already described in connection with the embodiments of FIGS. 10 and 11.

The same reference numerals are used to designate the upper and back portions, the front ends and some other features in the embodiments of FIGS. 46, 48, 52, 55, 59, 62, 66 and 69 which are analogous to the ones present in the embodiments 1, 10 and 15 and 1a, 10a and 15a of FIGS. 10 and 11, while different numerals are used to designate the lower portion which the previous embodiments did not have. Furthermore, it is deemed unnecessary to point out to all the same numerals in connection with the analogous features. The description of the abovementioned portions, as well as of the backing and facing layers, the adjustable straps and modes of securing the straps and the fastening means to the garment, will be omitted for the sake of brevity.

Turning now to FIGS. 42, 43, 44, 49 and 50, these general views illustrate the preferred exemplary embodiments 84, 89, 108 and 110 respectively, of the disposable garment; provided with two pouches, one pouch to receive and retain solid body wastes, and one pouch to receive and retain fluid body wastes, to be worn by male dogs, as applied to a male dog 8. The preferred embodiments 86 and 88 of the pouch to receive and retain fluid body wastes are also illustrated, showing in phantom the penis 8c and the absorbent pads 184 and 87.

Any one of the preferred embodiments 84, 89, 108 and 110 of the garment may be used in association with any one of the preferred embodiments 86 and 88 of the pouch to receive and retain fluid body wastes, as well as with any one of the preferred embodiments of the pouch to receive and retain solid body wastes already described. In a like manner any one of the preferred embodiments of adjustable straps, i.e. plain or elasticized and any one of the preferred embodiments of fastening means, i.e. a pressure sensitive fastener 12 or a buckle 3 may be applied to any one of the embodiments 84, 89, 108 and 110 adapted to be disposed of.

Referring now to Figs., 46, 48, 52 and 55 these figures illustrate the preferred embodiments of the garment 89, 89a, 110 and 110a, to be worn by male dogs.

The embodiments comprise lower portions 93, 93a, 111 and 111a connected to the respective back portions 26 and 26a preferably with elasticized straps 91, 91a, 115 and 115a as shown in these figures.

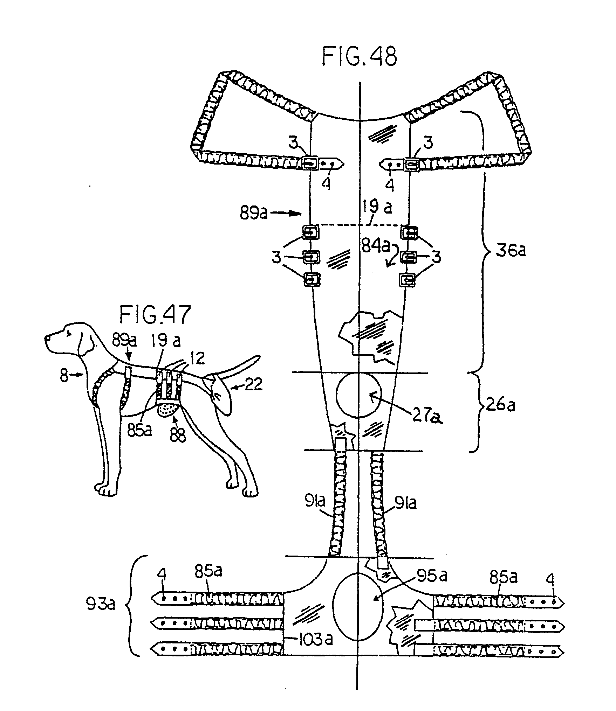

Basically, the preferred lower portions 93 and 93a of the embodiments 89 and 89a are analogous and of the shape best seen in FIGS. 46 and 48 and comprise an opening 95 and 95a respectively which extends entirely around the genital region of the wearer and along which periphery any one of the preferred embodiments 86 or 88 of the pouch for fluid waste is to be affixed.

The lower portions 93 and 93a are provided on the margins 103 and 103a preferably with 3 elasticized straps 85 and 85a, being the latter suitably longer.

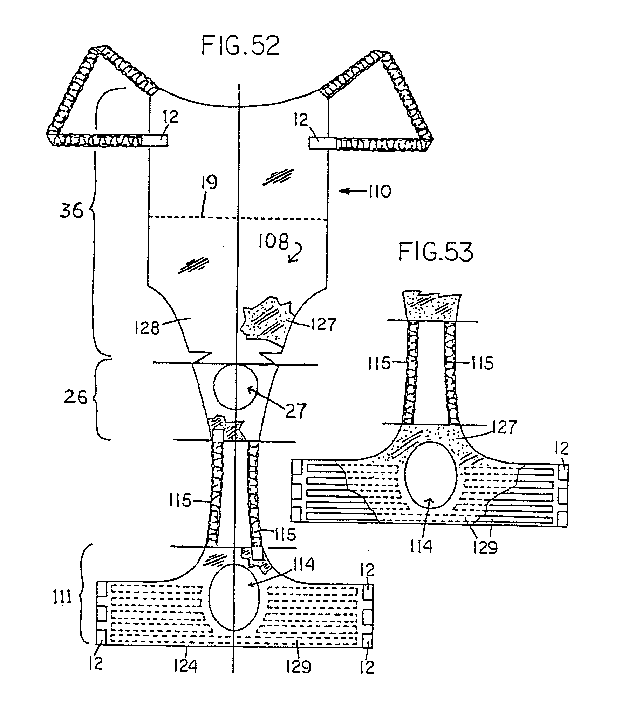

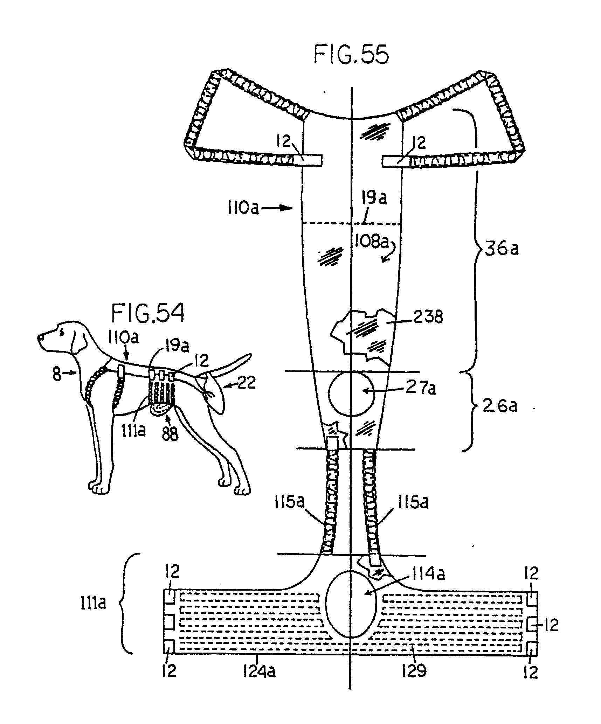

In a like manner the lower portions 111 and 111a of FIGS. 52 and 55 are analogous and preferably elasticized as shown in a stretched condition, being the latter suitably longer, and both of the shape best seen in these Figures.

The lower portions 111 and 111a comprise also an opening 114 and 114a for the genital region of the wearer along which periphery any one of the previously mentioned pouches for fluid waste are to be affixed.

The elasticized lower portion 111 and 111a are provided with a sequence of elastic members 129, each elastic member having a suitable thickness, sandwiched between the backing layer 128 made of polyethylene film and the facing layer made in a preferred embodiment of porous non-woven fibrous web 127 and in another embodiment made of polyethylene film 238 as shown in FIGS. 53 and 55 respectively, and placed lengthwise on the lower portion parallel to the back end 124 and 124a. The description given for the adjustable elasticized straps of FIGS. 9 and 12 is applicable to the elasticized lower portion 111 and 111a.

Dotted lines 19 and 19a indicate the front ends of the upper portion 36 and 36a in the embodiments 84, 84a, 108 and 108a. FIG. 45 illustrates the underside of the embodiment 84.

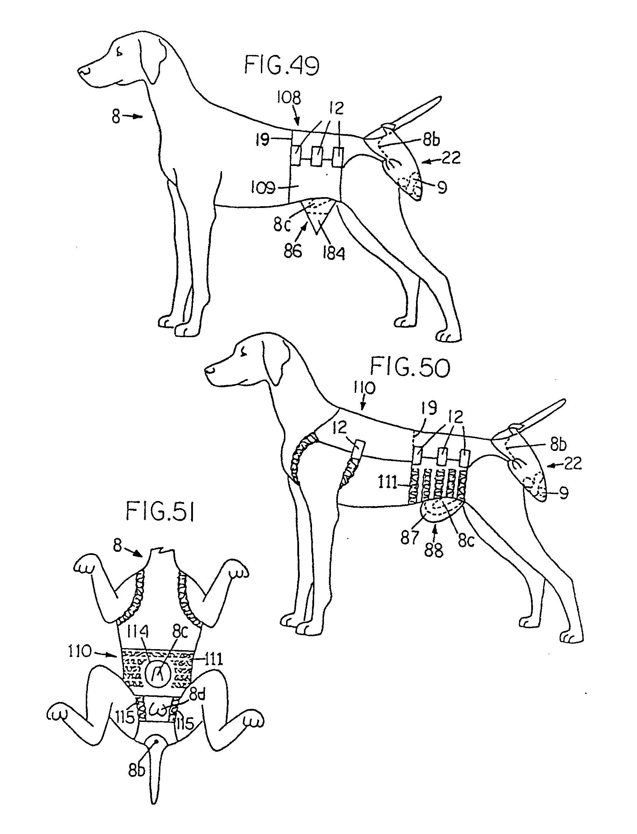

FIG. 49 shows the embodiment 108 with another preferred embodiment of a plain lower portion 109.

Turning now to FIGS. 59, 62, 66 and 69 these Figures illustrate the preferred embodiments 134, 134a, 158 and 158a to be worn by female dogs.

These embodiments also comprise lower portions 143, 143a, 167 and 167a having an opening 145, 145a, 169 and 169a respectively, which extends around the genital region of the wearer.

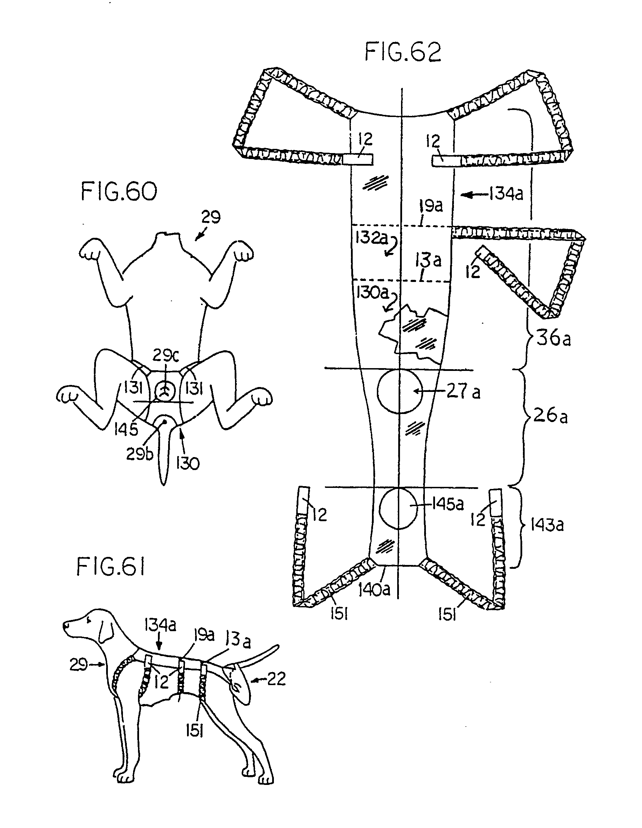

The lower portions 143 and 143a are analogous and are provided with straps connected to each side of the back end 140 and 140a, as shown in FIGS. 59 and 62 where plain adjustable straps 131 and elasticized adjustable straps 151 are illustrated.

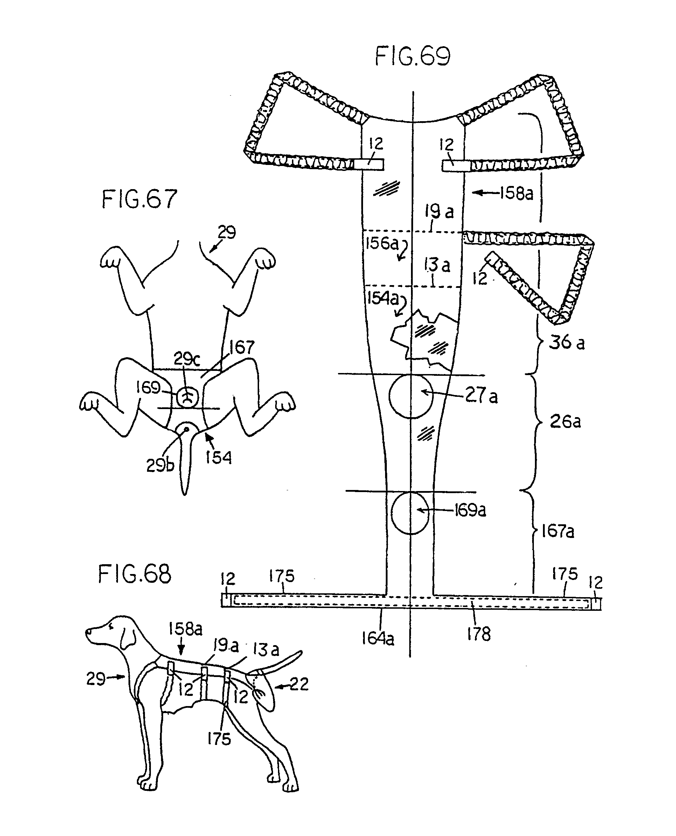

On the other hand, lower portions 167 and 167a of FIGS. 66 and 69 comprise strap-like portions 155 and 175 respectively, which are of the shape best seen in these figures and which are formed integral to the lower portions and located on each side at the level of the back ends 164 and 164a.

The strap-like portions 155 are preferably plain, while the strap-like portions 175 are preferably elasticized as described before and preferably provided with one elastic member 178 as shown in FIG. 69 in a stretched condition.

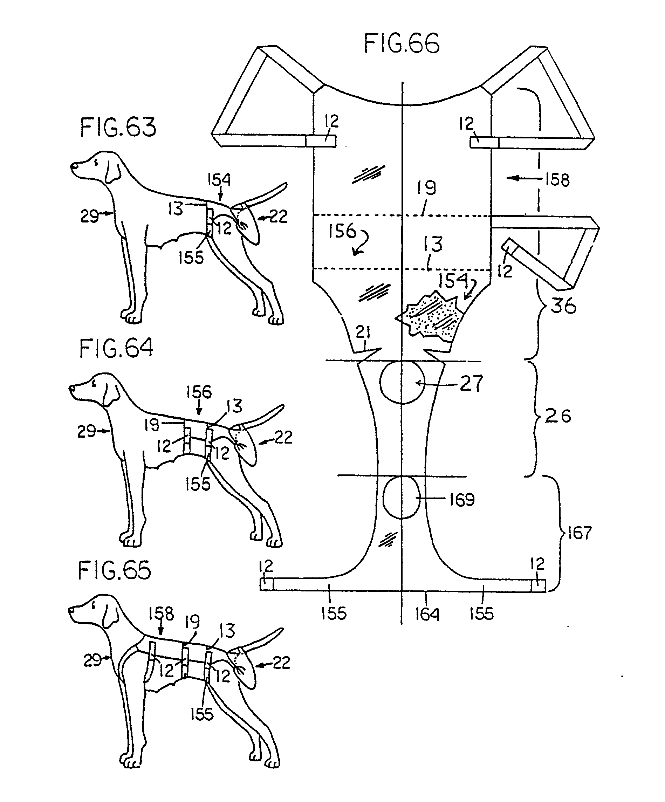

Dotted lines 13, 19, 13a, and 19a indicate the front ends of the shorter upper portions of the embodiments 130, 132 (FIGS. 56 and 57), 130a, 132a (FIG. 62), 154, 156 (FIGS. 63 and 64), 154a and 156a (FIG. 69).

Any one of the preferred embodiments of the garment shown in FIGS. 59, 62, 66 and 69 may be used in association with any one of the preferred embodiments of the pouch for fluid wastes of FIGS. 74, 77, 78 and 79 which will be described later, as well as with any one of the preferred embodiments of the pouch for solid wastes already described and any one of the preferred embodiments of adjustable straps and fastening means previously mentioned may be used in association with any one of those embodiments.

Referring now to FIGS. 70 through 79, these Figures illustrate the preferred embodiments of the fluid pouch. The embodiments 86 and 88 (FIGS. 70 to 73) and the embodiments 193, 193a, 205, 210 and 212 (FIGS. 74 through 79) are to be used by male and female wearers, respectively.

All the preferred embodiments of the pouch for fluid waste are provided with an absorbent pad 184, 87, 199, 199a and 208, FIGS. 70 through 79 respectively secured to the bottom of the pouch. In the disposable use of the garment the absorbent pad is preferably permanently adhered to the pouch (see FIGS. 70 through 74) with any suitable adhesive well known in the art, and in the reusable-washable use of the garment the absorbent pad is preferably inserted in a pocket (see FIGS. 75 through 79). The absorbent pad may comprise materials commonly used in absortive devices and well known in the art, for example a multiplicity of plies of crepped cellulose wadding, fluffed cellulosic fibers or comminuted wood pulp generally referred to as airfelt, or textile fibers or other absorbent materials. It is desired that a tissue paper envelope 183, 190, 198, 198a, 209 (FIGS. 70 through 79) preferably comprised of wet strength tissue paper or the like, is utilized to encapsulate the airfelt as well as any of the other abovementioned materials, and provide an absorbent pad exhibiting satisfactory in-use integrity.

The preferred embodiments 86, 88, 193, 205, 210 and 212 have shapes which are substantially conic, crescent-like, semispherical and flat to suitably adapt to the anatomy of the respective wearers and the absorbent pad is preferably formed to correspond to the shape of each pouch.

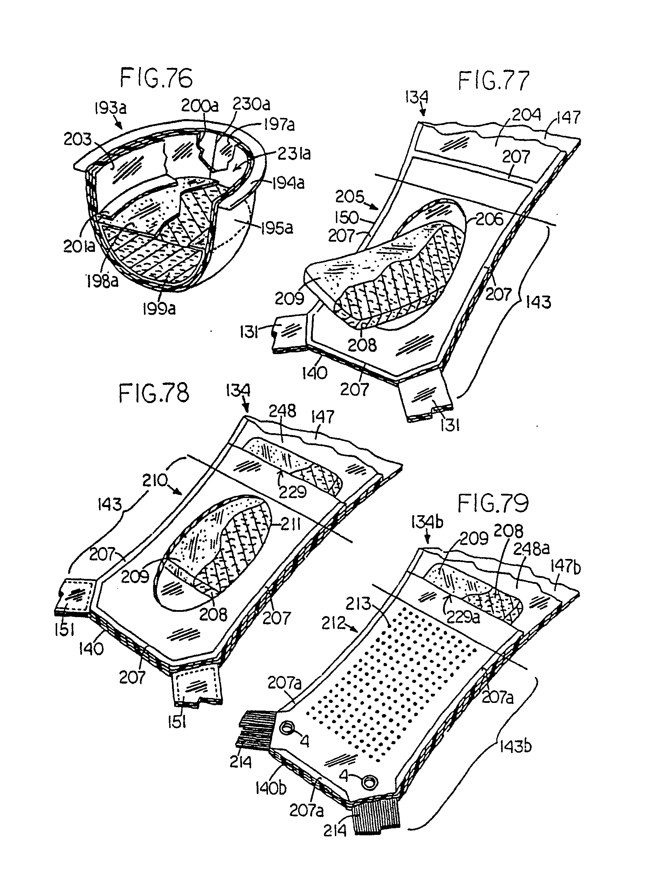

All the abovementioned embodiments, except the one shown in FIG. 79, are illustrated as adapted to the disposable use and comprise the previously mentioned backing and facing layers. FIGS. 70 through 79 illustrate the backing layer 182, 189, 197, 197a, 147 and 147b, and the facing layer 181, 185, 188, 196, 200, 204, 248 and 248a, respectively.

The preferred embodiments 86, 88, 193 and 193a are preferably provided with an outwardly directed flange 179, 186, 194 and 194a surrounding the entrance opening 240, 241, 231 and 231a to facilitate the bonding of the pouch to the lower portion of the garment along the periphery of the opening for the genital region of the wearer.

In the description that follows there are given examples of a mode in which each one of the preferred embodiments of the pouch may be constructed and which could be subject in practice to modifications and adjustments whenever convenient. Of course, any other way of constructing the pouch, in each one of the abovementioned embodiments, may also be employed and any other suitably shaped pouch may also be used, besides the embodiments described herein, provided that the pouch functions in a like manner and fulfills the same objective.

The conic pouch 86 may be constructed for example by folding preferably a semicircle and bonding together the radiuses 228, thus forming the walls 180.

FIG. 73 illustrates a mode in which the crescent-like shaped pouch 88 may be constructed, showing two walls 187 before being sealed, and the flange 186. The seam lines 192 are of the shape best seen in this figure. The semispherical pouch 193 may be preferably constructed for example with a sequence of curved sided triangular segments 195 as shown in FIG. 74 forming sealed seams 230.

FIGS. 75 and 76 illustrate the embodiment 193a which is analogous to 193 except for having a flange 201 with rim 202 and flange 201a with rim 203 forming a pocket to enclose the absorbent pad.

FIGS. 77, 78 and 79 illustrate the preferred embodiments 205, 210 and 212 of a flat pouch having a substantially rectangular shape provided on the inner surface of the lower portions 143 and 143b of the embodiment 134 and 134b of the garment. The flat pouches 205 and 210 have an entrance opening 206 and 211 respectively, and the embodiment 210 is open at the end 229 opposite the back end 140. Also shown are the seams 207 and 207a forming the flat pouch and straps 131, 151 and 214.

The flat pouch 212 is preferably provided with perforations 213, formed through the plastic layer, along a generally rectangular area of a suitable size, said area being located generally at the center of the flat pouch 212 whereby all fluid discharges will pass through them, so that all fluids may be absorbed by the absorbent pad 208 positioned inside the pouch.

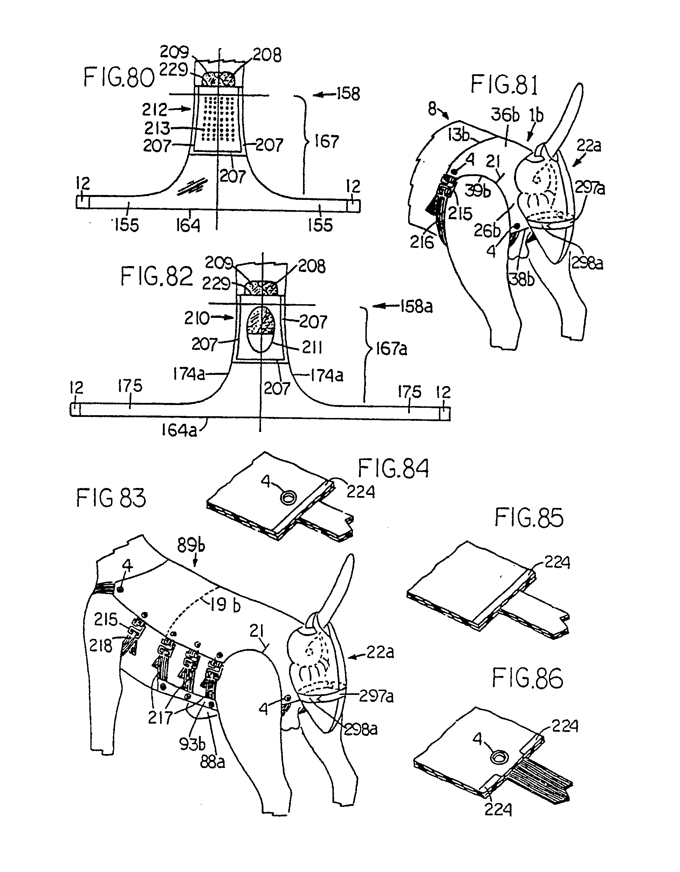

FIGS. 80 and 82 illustrate the preferred embodiments 212 and 210 of the flat pouch provided on the inner surface of the lower portion of the preferred embodiments 158 and 158a respectively.

Referring now to the integral reusable-washable use of the garment illustrated in FIGS. 81, 83 and 84 to 86, and to the attachable-reusable use with disposable or washable pouches illustrated in FIGS. 87 through 96, all the embodiments illustrated in these figures are analogous to the ones previously described for the disposable use, being the only difference the materials employed in their construction and the fact that the pouches in the attachable-reusable use are detachably connected. The same reference numerals accompanied by a letter, either a, b, or c, are used to point out to the different use in similar embodiments and a description of features which are analogous will be omitted for the sake of brevity.

All the preferred embodiments of the garment as well as all the preferred embodiments of the pouch for solid wastes and for fluid wastes previously described may be adapted to the reusable-washable use by using preferably vinyl sheeting and by using adjustable plain straps or adjustable elastic fabric straps provided with suitable separable fastening means, and the straps connecting the back portion to the lower portion in the embodiments of FIGS. 46, 48, 52 and 55 are preferably elastic fabric straps.

FIGS. 81, 83 exemplify the embodiment 1b and 89b of the garment provided with elastic fabric straps 216, 217 and 218 and a hook 215, and with pouch 22a and 88a respectively, as adapted to the integral reusable-washable use, and FIGS. 84 to 86 exemplify modes in which the adjustable straps may be secured (see Fig. 21) with an eyelet 4 and seam 224.

All the previously described embodiments of the garment and of the pouches for solid and for fluid waste may be adapted to the attachable-reusable use by using for the reusable wearer-contacting garment preferably soft fabric such as blue jeans, cotton, corduroy or knits or the like, and if desired, also opaque vinyl sheeting preferably matte and smooth or embossed, and preferably being of suitable colors, and by using for attachable disposable pouches preferably polyethylene film. The disposable pouches are attached with fastening means to the reusable wearer-contacting garment, before applying the garment to the wearer and detached after used to be disposed of. The adjustable straps are made of soft fabric or vinyl or elastic fabric straps, and are provided with any suitable fastening means. The elasticized lower portion of the embodiments 108, 110, 108a and 110a may be made in the attachable-reusable use of the garment of an elasticized fabric, formed for example with parallel strands of rubber stitched to the inner surface of the soft fabric used for the reusable garment and in the lower portion 167a of FIG. 69 the strap-like portions 175 are provided also with an elastic fabric strap. The straps connecting the back portion to the lower portion in the embodiments of FIGS. 46, 48, 52 and 55 are also preferably elastic fabric straps. The attachable washable pouches are preferably made of vinyl sheeting.

FIGS. 87 and 88 exemplify the embodiments 1c with attachable pouch 22b and the embodiment 130b with attachable pouches 5a and 193b. Also shown are the elastic straps 225 and loophole 225a, the fabric straps 232, the strap 298b of pouch 22b bonded at 300, and the over-edge stitching 227, among other features analogous to the ones already described.

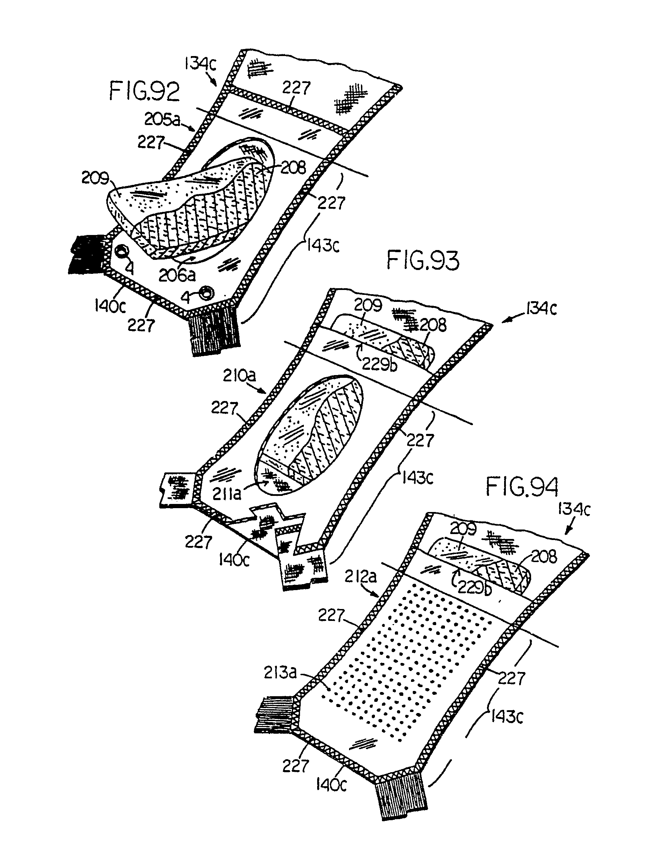

FIGS. 89 to 91 exemplify modes of securing the straps and FIGS. 92 to 94 exemplify the reusable-washable pouches 205a, 210a and 212a which are analogous to the ones shown in FIGS. 77 to 79, while FIGS. 95 and 96 illustrate the attachable disposable pouches 205b and 212b which differ from pouches 205a and 212a by being detachably connected to the lower portion with separable fasteners, so as to be detached after use to be disposed of.

In the attachable-washable use, pouches 205b and 212b are preferably made of vinyl with insertable absorbent pads; pouch 212b being open, in the washable use, at the end above the lateral line 138. After use pouches are washed and reused.

In the description that follows there is given an example of a mode in which the garment may be adapted to be worn by both male and female cats, and which could be subject in practice to modifications and adjustments whenever convenient. Of course, any other way of adapting the garment to be worn by cats may also be employed. Basically, all the previously described embodiments and uses of the garment and pouches may be adapted to be worn by cats although the embodiment 1 of the garment and pouch 5 or 20 are particularly suitable. Therefore, these embodiments were selected to exemplify the abovementioned adaptation.

All reference numerals present in FIGS. 110 to 119 are different from the previous ones designating similar features and portions of the garment and pouch, to denote the adaptation and modification of the embodiments already described to a different type of wearer. But a detailed description of similar features and portions is deemed unnecessary.

FIGS. 110 to 112 exemplify embodiments 258, 261 and 266 wherein the entrance opening 260, 263 and 268 on the back portion 259, 262 and 267 encompasses the root of the tail, the anal region and also the genital region of the wearer. Also shown plain straps 264.

FIGS. 110 and 111 illustrate a male cat 257 and a castrated cat respectively showing the anus 257a, testicles 257b also in phantom and the penis 257c.

FIG. 112 illustrates a female cat 265 showing the anus 265a and the vulva 265b.

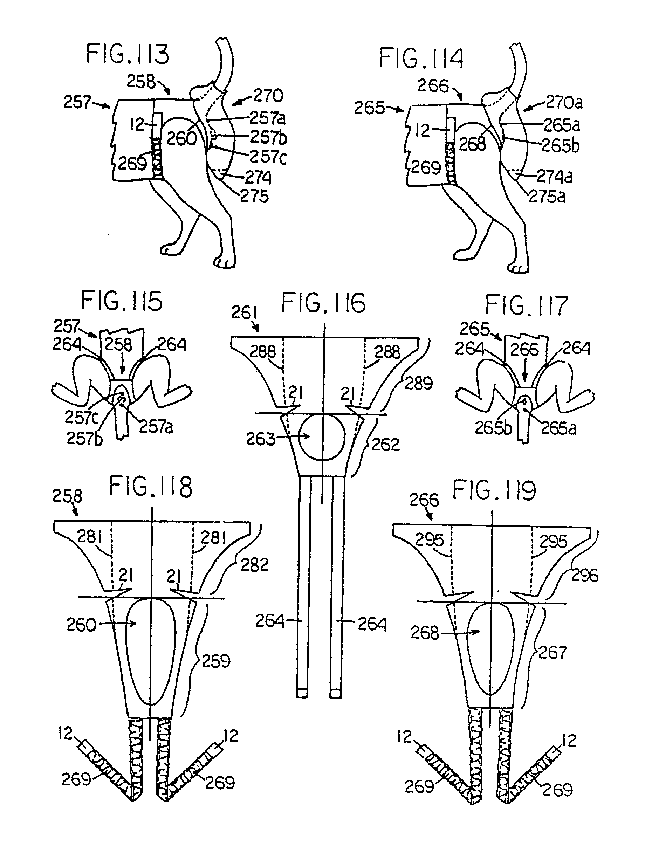

FIGS. 113 and 114 show a male and a female cat respectively with the embodiments 258 and 266 of the garment comprising elasticized straps 269 and one pouch 270 and 270a adapted to receive and retain solid as well as fluid body waste, provided with an absorbent pad 274 and 274a, secured at the bottom 275 and 275a of the pouch.

FIGS. 115 through 119 show the abovementioned embodiments of the garment 258, 261 and 266 as seen from the underside of the wearer and also as plan views showing dotted lines 281, 288 and 295 respectively, indicating the lateral edges of other preferred embodiments of the garment having narrower upper portions 282, 289 and 296 and back portions 259, 262 and 267.

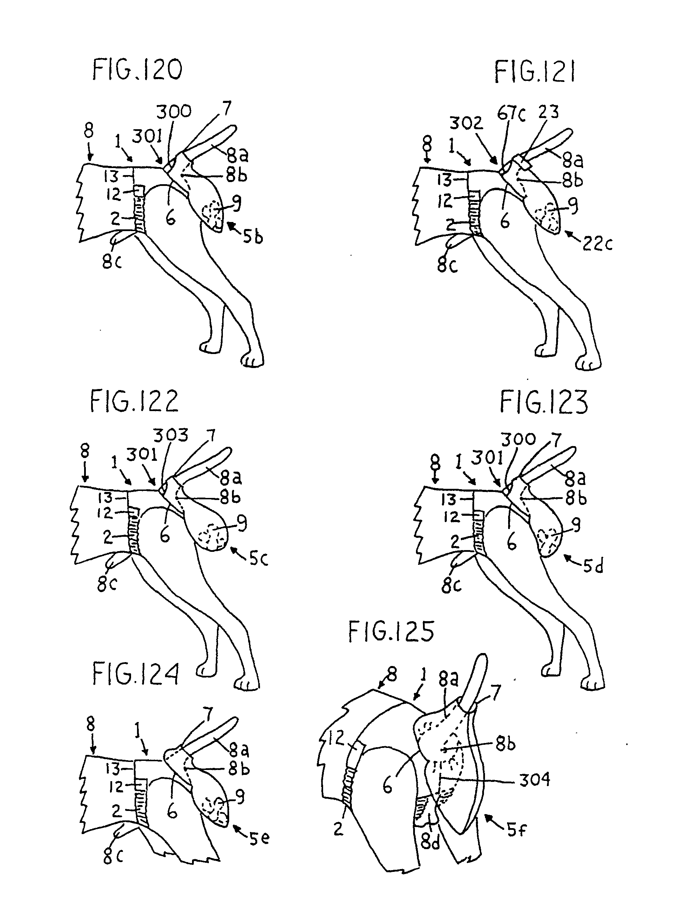

In the embodiments of FIGS. 120-123 the garment 1 is shown as comprising an upper and back portion with a front margin 13, secured to the wearer by elasticized straps 2 having pressure sensitive tape fasteners 12 at their free ends, merely for purposes of illustration. More particularly, each of these embodiments includes a solid waste pouch (5b in FIG. 120, 22c in FIG. 121, 5c in Fig. 122, and 5d in FIG. 123) having an entrance opening with a periphery secured at 6 to the periphery of the anal-tail opening of the garment back portion, and also having strap means for overlying the wearer's tail at a location spaced rearwardly of the root thereof. The strap means may simply be a unitary, integral portion of the pouch for extending over the tail at a location spaced rearwardly of the root, as in pouches 5b, 5c and 5d, or it may comprise straps 23, as in pouch 22c; in each case, the pouch is characterized by a gap (300 in FIGS. 120 and 123, 67c in FIG. 121, 303 in FIG. 122) through which a top portion of the tail is exposed between the strap means and the root of the tail. It will be understood that the term "strap means" is used herein broadly to designate the portion of the pouch structure overlying the tail rearwardly of the gap, in any solid waste pouch having such a gap.

As a further feature common to the embodiments of FIGS. 120-123, in each of the solid waste pouches therein shown, the periphery of the entrance opening is secured at 6 to the periphery of the anal-tail opening of the garment back portion only over an extent sufficient to encompass the anal region and opposed side portions of the root of the tail and to prevent leakage of waste from the container means. Thus, the pouch does not completely laterally surround the entire anal-tail opening of the garment back portion, but leaves a hiatus (301 in FIGS. 120, 122 and 123; 302 in FIG. 121) at the top of the latter opening, i.e. at the forward end of the gap 300, 67c, or 303.

Although it is preferred in at least many instances that the solid waste pouch completely surround (and be secured entirely around) the anal-tail opening of the garment back portion, nevertheless the pouches of FIGS. 120-123 also effectively prevent leakage of waste and provide the other advantages of the invention, because the line of attachment 6 extending around the anal region and upwardly (though only partially) around the root of the tail cooperates with the strap means to hold the margins of the gap 300, 67c or 303 against the tail so that the tail itself fully blocks the gap. The shape and dimensions of the gap edges are appropriately selected to this end.

The spacing between the garment back portion opening and the opening 7 defined by the rearward edge of the strap means need only be sufficient to prevent leakage. Also, considerable variation in size of the aforementioned gap is possible; a short or small gap 303 is provided in the embodiment of FIG. 122, while a longer or larger gap 300 or 67c is provided in the embodiments of FIGS. 120, 121 and 123.

Preferably, though not necessarily, the solid waste pouch of each of FIGS. 120-123 is formed with a puff below the tail. The bottom of the pouch may be of any suitable configuration; a tapered shape (most preferred) is shown in FIGS. 120 and 121, while two further preferred and illustrative configurations for the pouch bottom are shown in FIGS. 122 and 123 respectively, vis. a round bottom in pouch 5c and a crescent-like shaped bottom in pouch 5d. These shapes are equally applicable to all other solid waste pouches already described. In addition, all the solid waste pouches employed in the various embodiments of the invention may, if desired, be fabricated of a liquid-impermeable material having small perforations, e.g. for air circulation.

The embodiment of FIG. 124 is generally similar to that of FIG. 1 in respect of the solid waste pouch, except that the pouch 5e in FIG. 124 has a relatively short sleeve for the tail (i.e. a relatively short distance between the opening 7 and the forward end of the pouch), as illustrative of one of many possible variations of sleeve length within the scope of the invention, the sleeve of pouch 5e extending over an exemplary sufficient length of the tail to prevent leakage.

FIG. 125 is a view in illustration of a pouch 5f affixed at 304 along a longitudinal center line on the back portion of the garment beneath the entrance opening of the pouch.

From the aforegoing detailed description of the garment of the present invention, it will be apparent that numerous modifications can be made without affecting the concept of the invention.

No specific data were given herein in regard to the kind of adhesives and other substances that may be used in practicing the invention, and also in regard to specific grades of materials which are best suited for the garment of the present invention. It should be noted, however, that these characteristic materials and other details are well known to those skilled in the art, and no protection is sought for these expedients beyond the features of the invention explained hereinbefore and set forth in the claims.

The garment of the present invention in all its preferred embodiments, is easily placed on the wearer by leaving the adjustable straps, or in some embodiments the lower portion of the garment, unattached, until the tail of the wearer is secured in the opening for the tail located on the back portion of the garment, with the pouch to receive and retain solid body wastes surrounding the tail and in the embodiments further comprising a pouch to receive and retain fluid body wastes, until the pouch to receive and retain fluid body wastes is placed surrounding the respective genitalia of the wearer.

With the garment in place as described above, the adjustable straps, or in some embodiments the lower portion of the garment, provided with fastening means, are fastened to the upper portion of the garment around the body of the wearer, sufficiently tightly, yet comfortably to prevent leakage of solid or fluid body wastes outside the pouches. In the attachable reusable-disposable use of the garment as well as in the attachable reusable-washable use of the garment, the pouches are preferably attached to the garment, before placing the garment on the body of the wearer, to facilitate the application of the garment.

Following use, the garment is removed from the body of the wearer by detaching the adjustable straps, and in some embodiments the lower portion of the garment. Then, in the disposable garment as well as in the attachable-reusable disposable garment the pouches to receive and retain solid body wastes are sealed with the attachment or occludent means provided inside the pouch or with the adjustable straps placed outside the pouch, and if desired, with commercially available twist ties or "key-lock" closures, before discarding the garment in the garbage can, and in the reusable-washable garment, as well as in the attachable reusable-washable garment provided with attachable reusable-washable pouches, the feces are flushed down a water closet and the absorbent pad is removed from the pouch and discarded in the waste basket, at which point the garment and pouches may be washed and reused.

**Claims**

1. A device to be worn on the body by an animal such as a dog, cat or the like, for receiving and retaining the discharge of the body waste, said animal being a wearer of the device, and having a top line, a rear, an anal region at the rear, a tail with a root at the rear above the anal region, a genital region, a belly, hind legs, and forelegs, said root having a top and said tail projecting rearwardly from said root said device comprising: a wearer-contacting garment (1; 10; 15; etc.) having an upper portion (36; 36a; 36b; etc.) which extends over the top line of the wearer, a back portion (26; 26a; 26b; etc.) which extends over the rear of the wearer, said back portion having an opening (27; 27a; 27b; etc.) for register with the root of the tail and the anal region of the wearer and supporting container means (5; 5a; 5b; etc.) characterised in that the region of the wearer's body between the root of the tail and the anal region is kept clear of obstruction by the container means being supported only by the lower and lateral parts of the margin of the back portion opening and by one or both of: the upper part of the said margin passing around the top of the root of the tail, and; a portion of the wearer's tail spaced from its root.

2. The article of claim 1 wherein said wearer-contacting garment having an upper portion and a back portion further comprises a lower portion which extends over the genital region of the wearer, said lower portion having an opening for register with the genital region of the wearer and supporting container means communicating with the last-mentioned opening for receiving fluid body waste discharged therethrough.

3. The article of claim 2 wherein said lower portion is connected to said back portion and generally includes resilient means for conforming the garment to the body of the wearer.

4. The article of claim 2 wherein said lower portion is generally detachably connected to said upper portion and defining therewith at least hindlegs-receiving openings.

5. The article of claim 1 wherein said upper portion and said back portion includes resilient means for conforming the garment to the body of the wearer.

6. A device to be worn on the body by an animal such as a dog, cat or the like, for receiving and retaining the discharge of body waste, said animal being a wearer of the device, and having a top line, a rear, an anal region at the rear, a tail with a root at the rear above the anal region, a genital region, a belly, hindlegs, and forelegs, said root having a top and said tail projecting rearwardly from said root, said device comprising: a wearer-contacting garment (1; 10; 15; etc.) having an upper portion (36; 36a; 36b; etc.) which extends over the top line of the wearer, and a back portion (26; 26a; 26b; etc.) which extends over the rear of the wearer, and said back portion having one opening (27; 27a; 27b; etc.) defined therein, said opening having a continuous periphery extending around an area of the rear of the wearer including the root of the tail and the anal region of the wearer; container means (5; 5a; 5b; etc.) having at least one entrance opening (54; 54a; 65; etc.) defined therein to receive the discharge of body waste, said one entrance opening having a periphery connected to the periphery of said one opening of said back portion for supporting said container means on said back portion; and means connected to said wearer-contacting garment at selected regions, to fasten the garment tightly yet comfortably and securely around the body of the wearer said one opening of said back portion being of a size to encompass both the root of the tail and the anal region of the wearer, and said continuous periphery of said one opening of said back portion extending entirely around an area of the rear of the wearer including both the root of the tail and the anal region of the wearer, characterised in that said one entrance opening of said container means is of a size to encompass both the root of the tail and the anal region of the wearer, that said container means is shaped and dimensioned to at least partially laterally surround said one opening of said back portion and to extend over the top of the wearer's tail at least at a location spaced rearwardly of the root thereof, and that said periphery of said one entrance opening is connected as aforesaid to the periphery of said one opening of said back portion over an extent at least sufficient to encompass the anal region and opposed side portions of the root of the tail.

7. The article of claim 6 wherein said container means having at least one entrance opening defined therein to receive the discharge of body waste is a pouch comprising a top portion, a back portion wherein said entrance opening is generally located, a front portion opposite to said back portion, and a closed bottom wherein solid waste can be confined.

8. The article of claim 7 wherein said top portion has a sleeve-like shape with an opening defined therein of a suitable size for the tail to come out, said sleeve-like shaped top portion extending for a length along and around the tail rearwardly of the root thereof.

9. The article of claim 8 wherein said sleeve-like portion extends for a length along and around the tail, in an outward direction at an angle adapted to the position of the wearer's tail and rearwardly of the root thereof.

10. The article of claim 8 wherein said sleeve-like top portion extends for a length along and around the tail, in a substantially upward direction adapted to the position of the wearer's tail and rearwardly of the root thereof.

11. The article of claim 8 wherein said pouch has means connected to said closed bottom to retain fluid waste.

12. The article of claim 11 wherein said means to retain fluid waste is an absorbent pad connected to the inside of said pouch at said bottom.

13. The article of claim 7 wherein said top portion is closed.

14. The article of claim 7 wherein said pouch has means to enclose solid waste within said pouch after use.

15. The article of claim 14 wherein said means are generally two straps connected to the outside of said pouch and located transversely to said pouch below said entrance opening which encompasses both the root of the tail and the anal region of the wearer, said straps to be fastened to enclose solid waste within the bottom of said pouch.

16. The article of claim 7 wherein said pouch is permanently connected along the periphery of said entrance opening to the back portion of said wearer-contacting garment.

17. The article of claim 7 wherein said pouch is detachably connected along the periphery of said entrance opening to the back portion of said wearer-contacting garment.

18. The article of claim 6 wherein said container mans includes strap means for overlying the wearer's tail at a location spaced rearwardly of the root thereof.

19. The article of claim 18 wherein said container means is a pouch comprising a top portion, a back portion wherein said entrance opening is generally located, a front portion opposite to said back portion, and a closed bottom wherein solid waste can be confined; wherein said top portion has an aperture for the tail to come out, said aperture having facing edge portions; and wherein said strap means extend from said facing edge portions of the last-mentioned aperture in overlying relation to the wearer's tail at a location spaced rearwardly of the root thereof.

20. The article of claim 18 wherein said container means is a pouch comprising a top portion, a back portion wherein said entrance opening is generally located, a front portion opposite to said back portion, and a closed bottom wherein solid waste can be confined; wherein said top portion has an aperture for the tail to come out, said aperture having facing edge portions; and wherein said strap means comprise generally two straps respectively extending from said facing edges of said aperture at a location rearwardly of the root of the tail, said straps to be fastened around the tail to hold said pouch in place.

21. The article of claim 18 wherein said container means comprises a pouch having a closed bottom, and wherein said pouch has means connected to said closed bottom to retain fluid waste.

22. The article of claim 21 wherein said means to retain fluid waste is an absorbent pad connected to the inside of said pouch at said bottom.

23. The article of claim 6 wherein the periphery of said entrance opening of said container means completely laterally surrounds said one opening of said back portion.

24. The article of claim 6 wherein said wearer-contacting garment having an upper portion and a back portion comprises a lower portion which extends over the genital region of the wearer, said lower portion having an opening defined therein of a size to extend entirely around the periphery of the genital region of the wearer; and container means having a closed bottom and one entrance opening to receive the discharge of fluid body waste, said last-mentioned entrance opening being of a size to extend entirely around the periphery of the genital region of the wearer whereby said container means is connected to said lower portion along the periphery of said lower-portion opening and said container means having means connected to said closed bottom to retain fluid waste.

25. The article of claim 24 wherein said lower portion is generally resilient and is connected to said back portion generally by resilient means, said lower portion being generally detachably connected to said upper portion defining therewith at least hind-legs-receiving openings.

26. The article of claim 24 wherein said container means comprises a pouch to receive the discharge of fluid body waste and said pouch is permanently connected along the periphery of said entrance opening to the lower portion of said wearer-contacting garment.

27. The article of claim 24 wherein said container means comprises a pouch to receive the discharge of fluid waste and said pouch is detachably connected along the periphery of said entrance opening to the lower portion of said wearer-contacting garment.

28. The article of claim 24 wherein said container means comprises a pouch and said means to retain fluid waste is an absorbent pad connected to the inside of said pouch at said bottom.

29. The article of claim 6 wherein said means connected to said wearer-contacting garment to fasten said garment to the wearer are generally resilient adjustable straps, to fit said garment to animals of different sizes.

30. The article of claim 29 wherein said adjustable straps are connected to said wearer-contacting garment at locations defining at least hind-legs-receiving openings.

31. A device to be worn on the body by an animal such as a dog, cat or the like, for receiving and retaining the discharge of body waste, said animal being a wearer of the device, and having a top line, a rear, an anal region at the rear, a tail with a root at the rear above the anal region, a genital region, a belly, hind legs, and forelegs, said root having a top and said tail projecting rearwardly from said root, said device comprising: a wearer-contacting garment (1; 10; 15; etc.) having an upper portion (36; 36a; 36b; etc.) which extends over the top line of the wearer, a back portion (26; 26a; 26b; etc.) which extends over the rear of the wearer, said back portion having an opening (27; 27a; 27b; etc.) at the rear and supporting first container means (5; 5a; 5b; etc.) for receiving solid body waste discharged therethrough, a lower portion (93; 93a; 111; etc.) which extends over the genital region of the wearer, said lower portion having an opening (95; 95a; 114; etc.) defined therein of a size to extend entirely around the periphery of the genital region of the wearer, and second container means (86; 88; 88a; etc.) for fluid waste having a closed bottom and one entrance opening (206; 211; 231; etc.) to receive the discharge of fluid body waste, said one entrance opening being of a size to extend entirely around the periphery of the genital region of the wearer, said second container means being connected to said lower portion along the periphery of said opening of said lower portion and means connected to said wearer-contacting garment at selected regions to fasten the garment tightly yet comfortably and securely around the body of the wearer, characterised in that the region of the wearer's body between the root of the tail and the anal region is kept clear of obstruction by the first container means being supported only by the lower and lateral parts of the margin of the back portion opening and by one or both of: the upper part of the said margin passing around the top of the root of the tail, and; a portion of the wearer's tail spaced from its root, and in that said second container means has means connected to said closed bottom to retain fluid waste.

32. The article of claim 26 wherein said means to retain fluid waste is an absorbent pad connected to the inside of said second container means at said bottom.

## Revendications

1. Un dispositif destiné à être porté sur le corps par un animal tel qu'un chien, un chat ou animal similaire, pour recevoir et retenir l'évacuation des déchets corporels, ledit animal étant un porteur du dispositif et ayant un dessus, un derrière, une région anale à l'arrière, une queue avec une racine à l'arrière audessus de la région anale, une région génitale, un ventre, des pattes arrière et des pattes avant, ladite racine ayant un dessus et ladite queue étant projetée vers l'arrière à partir de ladite racine, ledit dispositif comprenant : un vêtement de contact avec le porteur (1; 10; 15; etc.) pourvu d'une partie supérieure (36; 36a; 36b; etc.) qui s'étend sur le dessus du porteur, d'une partie arrière (26; 26a; 26b; etc.) qui s'étend sur le derrière du porteur, ladite partie arrière comportant une ouverture (27; 27a; 27b; etc.) pour correspondance exacte avec la racine de la queue et la région anale du porteur, et supportant un moyen récipient (5; 5a; 5b; etc.) caractérisé en ce que la région du corps du porteur entre la racine de la queue et la région anale est maintenue libre d'obstructions du fait que le moyen récipient est supporté uniquement par les parties inférieure et latérales du bord de l'ouverture de la partie arrière et par une ou les deux de ce qui suit : la partie supérieure dudit bord passant autour du dessus de la racine de la queue, et; une partie de la queue du porteur espacée de sa racine.

2. L'article de la revendication 1 dans lequel ledit vêtement de contact avec le porteur ayant une partie supérieure et une partie arrière comprend également une partie inférieure s'étendant sur la région génitale du porteur, ladite partie inférieure comportant une ouverture pour correspondance exacte avec la région génitale du porteur et supportant un moyen récipient communiquant avec cette dernière ouverture pour recevoir les déchets corporels liquides évacués à travers cette ouverture.

3. L'article de la revendication 2 dans lequel ladite partie inférieure est reliée à ladite partie arrière et comprend généralement des moyens résilients grâce auxquels le vêtement épouse la forme du corps du porteur.

4. L'article de la revendication 2 dans lequel ladite partie inférieure est généralement reliée, de manière détachable, à ladite partie supérieure et forme ainsi au moins des ouvertures destinées à recevoir les pattes arrière.

5. L'article de la revendication 1 dans lequel ladite partie supérieure et ladite partie arrière comprennent des moyens résilients grâce auxquels le vêtement épouse la forme du corps du porteur.

6. Un dispositif destiné à être porté sur le corps par un animal, tel qu'un chien, un chat ou animal similaire, pour recevoir et retenir l'évacuation des déchets corporels, ledit animal étant un porteur du dispositif et ayant un dessus, un derrière, une région anale à l'arrière, une queue avec une racine à l'arrière au-dessus de la région anale, une région génitale, un ventre, des pattes arrière et des pattes avant, ladite racine ayant un dessus et ladite queue étant projetée vers l'arrière à partir de ladite racine, ledit dispositif comprenant : un vêtement de contact avec le porteur (1; 10; 15; etc.) pourvu d'une partie supérieure (36; 36a; 36b; etc.) s'étendant sur le dessus du porteur, et d'une partie arrière (26; 26a; 26b; etc.) s'étendant sur le derrière du porteur, et ladite partie arrière comportant une ouverture (27; 27a; 27b; etc.) qui y est formée, ladite ouverture ayant une périphérie continue s'étendant autour d'une région du derrière du porteur y compris la racine de la queue et la région anale du porteur; un moyen récipient (5, 5a; 5b; etc.) comportant au moins une ouverture d'entrée (54; 54a; 65; etc.) qui y est formée pour recevoir l'évacuation des déchets corporels, ladite ouverture d'entrée ayant une périphérie reliée à la périphérie de ladite ouverture de ladite partie arrière pour supporter ledit moyen récipient sur ladite partie arrière; et des moyens reliés audit vêtement de contact avec le porteur à des régions sélectionnées pour attacher le vêtement fermement, mais confortablement, et solidement autour du corps du porteur, ladite ouverture de ladite partie arrière étant de taille à envelopper la racine de la queue aussi bien que la région anale du porteur, et ladite périphérie continue de ladite ouverture de ladite partie arrière s'étendant entièrement autour d'une région du derrière du porteur, y compris la racine de la queue aussi bien que la région anale du porteur, caractérisés en ce que ladite ouverture d'entrée dudit moyen récipient est de taille à envelopper la racine de la queue aussi bien que la région anale du porteur, en ce que ledit moyen récipient a une forme et une dimension le permettant d'entourer latéralement au moins en partie ladite ouverture de ladite partie arrière et de s'étendre sur le dessus de la queue du porteur au moins à un endroit espacé vers l'arrière par rapport à la racine elle-même, et en ce que ladite périphérie de ladite ouverture d'entrée est reliée, comme mentionné précédemment, à la périphérie de ladite ouverture de ladite partie arrière sur une étendue qui soit au moins suffisante pour envelopper la région anale et les parties latérales opposées de la racine de la queue.

7. L'article de la revendication 6 dans lequel ledit moyen récipient pourvu d'au moins une ouverture d'entrée qui y est formée pour recevoir l'évacuation des déchets corporels consiste en une poche comprenant une partie supérieure, une partie arrière où est généralement située ladite ouverture d'entrée, une partie avant vis-à-vis ladite partie arrière, et un fond fermé où peuvent être confinés les déchets solides.

8. L'article de la revendication 7 dans lequel ladite partie supérieure a la forme d'une manche, une ouverture de taille adéquate pour faire sortir la queue y étant pratiquée, ladite partie supérieure sous forme de manche s'étendant sur une certaine longueur le long et autour de la queue vers l'arrière par rapport à la racine de la queue.

9. L'article de la revendication 8 dans lequel ladite partie sous forme de manche s'étend sur une certaine longueur le long et autour de la queue, vers l'extérieur à un angle adapté à la position de la queue du porteur et vers l'arrière depuis la racine de la queue.

10. L'article de la revendication 8 dans lequel ladite partie supérieure sous forme de manche s'étend sur une certaine longueur le long et autour de la queue, dans une direction essentiellement ascendante adaptée à la position de la queue du porteur et vers l'arrière depuis la racine de la queue.

11. L'article de la revendication 8 dans lequel ladite poche est pourvue de moyens reliés audit fond fermé pour retenir les déchets liquides.

12. L'article de la revendication 11 dans lequel lesdits moyens de retenir les déchets liquides consistent en un tampon absorbant relié à l'intérieur de ladite poche audit fond.

13. L'article de la revendication 7 dans lequel ladite partie supérieure est fermée.

14. L'article de la revendication 7 dans lequel ladite poche est pourvue de moyens pour enfermer les déchets solides à l'intérieur de ladite poche après usage.

15. L'article de la revendication 14 dans lequel lesdits moyens consistent généralement en deux bandes reliées à l'extérieur de ladite poche et situées transversalement par rapport à ladite poche sous ladite ouverture d'entrée qui enveloppe à la fois la racine de la queue et la région anale du porteur, lesdites bandes devant être attachées pour enfermer les déchets solides dans le fond de ladite poche.

16. L'article de la revendication 7 dans lequel ladite poche est reliée en permanence le long de la périphérie de ladite ouverture d'entrée à la partie arrière dudit vêtement de contact avec le porteur.

17. L'article de la revendication 7 dans lequel ladite poche est reliée de manière détachable le long de la périphérie de ladite ouverture d'entrée à la partie arrière dudit vêtement de contact avec le porteur.

18. L'article de la revendication 6 dans lequel ledit moyen récipient comprend des moyens de bande pour recouvrir la queue du porteur à un endroit espacé vers l'arrière par rapport à la racine de la queue.

19. L'article de la revendication 18 dans lequel ledit moyen récipient consiste en une poche comprenant une partie supérieure, une partie arrière où ladite ouverture d'entrée est généralement située, une partie avant vis-à-vis ladite partie arrière, et un fond fermé où peuvent être confinés les déchets solides; dans lequel ladite partie supérieure a une ouverture pour laisser sortir la queue, ladite ouverture ayant des bords qui se font face; et dans lequel lesdits moyens de bande s'étendent depuis lesdits bords se faisant face de cette dernière ouverture en relation sus-jacente par rapport à la queue du porteur à un endroit espacé vers l'arrière depuis la racine de la queue.

20. L'article de la revendication 18 dans lequel ledit moyen récipient consiste en une poche comprenant une partie supérieure, une partie arrière où ladite ouverture d'entrée est généralement située, une partie avant vis-à-vis ladite partie arrière, et un fond fermé où peuvent être confinés les déchets solides; dans lequel ladite partie supérieure a une ouverture pour laisser sortir la queue, ladite ouverture ayant des bords qui se font face; et dans lequel lesdits moyens de bande comprennent généralement deux bandes qui s'étendent respectivement depuis lesdits bords se faisant face de ladite ouverture à un endroit situé à l'arrière de la racine de la queue, lesdites bandes devant être attachées autour de la queue pour retenir ladite poche en place.

21. L'article de la revendication 18 dans lequel ledit moyen récipient comprenne une poche ayant un fond fermé, ladite poche comportant des moyens reliés audit fond fermé pour retenir les déchets liquides.

22. L'article de la revendication 21 dans lequel lesdits moyens de retenir les déchets liquides consistent en un tampon absorbant relié à l'intérieur de ladite poche audit fond.

23. L'article de la revendication 6 dans lequel la périphérie de ladite ouverture d'entrée dudit moyen récipient entoure latéralement complètement ladite ouverture de ladite partie arrière.

24. L'article de la revendication 6 dans lequel ledit vêtement de contact avec le porteur comportant une partie supérieure et une partie arrière comprend une partie inférieure qui s'étend sur la région génitale du porteur, ladite partie inférieure ayant une ouverture pratiquée dont la taille lui permet de s'étendre entièrement autour de la périphérie de la région génitale du porteur; et un moyen récipient ayant un fond fermé et une ouverture d'entrée pour recevoir l'évacuation de déchets corporels liquides, cette dernière ouverture d'entrée étant de taille à s'étendre entièrement autour de la périphérie de la région génitale du porteur par laquelle ledit moyen récipient est reliés à ladite partie inférieure le long de la périphérie de ladite ouverture de la partie inférieure et ledit moyen récipient étant pourvus de moyens reliés audit fond fermé pour retenir les déchets liquides.

25. L'article de la revendication 24 dans lequel ladite partie inférieure est généralement résiliente et est reliée à ladite partie arrière généralement par des moyens résilients, ladite partie inférieure étant généralement reliée de manière détachable à ladite partie supérieure formant ainsi au moins des ouvertures destinées à recevoir les pattes arrière.

26. L'article de la revendication 24 dans lequel ledit moyen récipient comprenne une poche pour recevoir l'évacuation des déchets corporels liquides et ladite poche est reliée en permanence le long de la périphérie de ladite ouverture d'entrée à la partie inférieure dudit vêtement de contact avec le porteur.

27. L'article de la revendication 24 dans lequel ledit moyen récipient comprenne une poche pour recevoir l'évacuation des déchets liquides et ladite poche est reliée de manière détachable le long de la périphérie de ladite ouverture d'entrée à la partie inférieure dudit vêtement de contact avec le porteur.

28. L'article de la revendication 24 dans lequel ledit moyen récipient comprenne une poche et lesdits moyens de retenir les déchets liquides consistent en un tampon absorbant relié à l'intérieur de ladite poche audit fond.

29. L'article de la revendication 6 dans lequel lesdits moyens reliés audit vêtement de contact avec le porteur pour attacher ledit vêtement au porteur consistent généralement en bandes réglables résilientes pour ajuster ledit vêtement aux animaux de différentes tailles.

30. L'article de la revendication 29 dans lequel lesdites bandes réglables sont reliées audit vêtement de contact avec le porteur à des endroits formant au moins des ouvertures recevant les pattes arrière.

31. Un dispositif destiné à être porté sur le corps par un animal, tel qu'un chien, un chat ou animal similaire, pour recevoir et retenir l'évacuation des déchets corporels, ledit animal étant un porteur du dispositif et ayant un dessus, un derrière, une région anale à l'arrière, une queue avec une racine à l'arrière au-dessus de la région anale, une région génitale, un ventre, des pattes arrière et des pattes avant, ladite racine ayant un dessus et ladite queue étant projetée vers l'arrière à partir de ladite racine, ledit dispositif comprenant : un vêtement de contact avec le porteur (1; 10; 15; etc.) pourvu d'une partie supérieure (36; 36a; 36b; etc.) s'étendant sur le dessus du porteur, d'une partie arrière (26; 26a; 26b; etc.) s'étendant sur le derrière du porteur, ladite partie arrière comportant une ouverture (27; 27a; 27b; etc.) à l'arrière et supportant le premier moyen récipient (5; 5a; 5b; etc.) pour recevoir les déchets corporels solides évacués par cette ouverture, d'une partie inférieure (93; 93a; 111; etc.) s'étendant sur la région génitale du porteur, ladite partie inférieure comportant une ouverture (95; 95a; 114; etc.) pratiquée, de taille à s'étendre entièrement autour de la périphérie de la région génitale du porteur, et le deuxième moyen récipient (86; 88; 88a; etc.) pour les déchets liquides ayant un fond fermé et une ouverture d'entrée (206; 211; 231; etc.) pour recevoir l'évacuation des déchets corporels liquides, ladite ouverture d'entrée étant de taille à s'étendre entièrement autour de la périphérie de la région génitale du porteur, ledit deuxième moyen récipient étant relié à ladite partie inférieure le long de la périphérie de ladite ouverture de ladite partie inférieure et des moyens reliés audit vêtement de contact avec le porteur à des régions sélectionnées pour fixer le vêtement fermement, mais confortablement, et solidement autour du corps du porteur, caractérisés en ce que la région du corps du porteur entre la racine de la queue et la région anale est maintenue libre d'obstructions du fait que le premier moyen récipient est supporté uniquement par les parties· inférieure et latérales du bord de l'ouverture de la partie arrière et par une ou les deux de ce qui suit : la partie supérieure dudit bord passant autour du dessus de la racine de la queue, et; une partie de la queue du porteur espacée de sa racine, et en ce que le deuxième moyen récipient est pourvu de moyens reliés audit fond fermé pour retenir les déchets liquides.

32. L'article de la revendication 26 dans lequel lesdits moyens de retenir les déchets liquides consistent en un tampon absorbant relié à l'intérieur du deuxième moyen récipient audit fond.

## Patentansprüche

1. Eine am Körper eines Tieres, beispielsweise eines Hundes, einer Katze oder dergleichen zu tragende Vorrichtung zum Auffangen und Zurückhalten der vom Körper ausgeschiedenen Exkremente, wobei das erwähnte Tier Träger der Vorrichtung ist und eine Oberlinie, ein Hinterteil, einen Afterbereich am Hinterteil, einen Schwanz mit einer Schwanzwurzel am Hinterteil über dem Afterbereich, einen Genitalbereich, einen Bauch, Hinterbeine und Vorderbeine besitzt, die erwähnte Schwanzwurzel eine Oberseite hat und der erwähnte Schwanz von der erwähnten Schwanzwurzel aus rückwärts übersteht, und die erwähnte Vorrichtung umfaßt: ein den Träger berührendes Bekleidungsstück (1; 10; 15 usw.) mit einem oberen Abschnitt (36; 36a; 36b usw.), der sich über die Oberlinie des Trägers erstreckt, einem rückwärtigen Abschnitt (26; 26a; 26b usw.), der sich über das Hinterteil des Trägers erstreckt, wobei der erwähnte rückwärtige Abschnitt eine Öffnung (27; 27a; 27b usw.) zum Zusammenpassen mit der Schwanzwurzel und dem Afterbereich des Trägers aufweist und abstützende Behältnismittel (5; 5a; 5b usw.), dadurch gekennzeichnet, daß der Bereich des Körpers des Trägers zwischen der Schwanzwurzel und dem Afterbereich dadurch behinderungsfrei gehalten wird, daß das Behältnismittel nur durch die unteren und seitlichen Teile des Randes der Öffnung des rückwärtigen Abschnitts abgestützt ist sowie durch jeweils eines oder beides, den oberen Teil des erwähnten Randes, der um die Oberseite der Schwanzwurzel herumführt bzw. einen Abschnitt des Schwanzes des Trägers in einem gewissen Abstand von seiner Wurzel.

2. Der Gegenstand des Anspruchs 1, wobei das erwähnte, den Träger berührende Bekleidungsstück, das einen oberen Abschnitt und einen rückwärtigen Abschnitt hat, des weiteren einen unteren Abschnitt umfaßt, der sich über den Genitalbereich des Trägers erstreckt, wobei der erwähnte untere Abschnitt eine Öffnung zum Zusammenpassen mit dem Genitalbereich des Trägers aufweist und mit letztgenannter Öffnung in Verbindung stehende Behältnismittel zum Auffangen der vom Körper über dieselbe ausgeschiedenen flüssigen Exkremente abstützt.

3. Der Gegenstand des Anspruchs 2, wobei der erwähnte untere Abschnitt mit dem erwähnten rückwärtigen Abschnitt verbunden ist und im allgemeinen elastische Mittel zur Anpassung des Bekleidungsstücks an den Körper des Trägers einschließt.

4. Der Gegenstand des Anspruchs 2, wobei der erwähnte untere Abschnitt im allgemeinen lösbar mit dem erwähnten oberen Abschnitt verbunden ist und dadurch mindestens die Hinterbeine aufnehmende Öffnungen festlegt.

5. Der Gegenstand des Anspruchs 1, wobei der erwähnte obere Abschnitt und der erwähnte rückwärtige Abschnitt elastische Mittel zur Anpassung des Bekleidungsstücks an den Körper des Trägers einschließt.

6. Eine am Körper eines Tieres, beispielsweise eines Hundes, einer Katze oder dergleichen zu tragende Vorrichtung zum Auffangen und Zurückhalten der vom Körper ausgeschiedenen Exkremente, wobei das erwähnte Tier Träger der Vorrichtung ist und eine Oberlinie, ein Hinterteil, einen Afterbereich am Hinterteil, einen Schwanz mit einer Schwanzwurzel am Hinterteil über dem Afterbereich, einen Genitalbereich, einen Bauch, Hinterbeine und Vorderbeine besitzt, die erwähnte Schwanzwurzel eine Oberseite hat und der erwähnte Schwanz von der erwähnten Schwanzwurzel aus rückwärts übersteht, wobei die erwähnte Vorrichtung umfaßt: ein den Träger berührendes Bekleidungsstück (1; 10; 15 usw.) mit einem oberen Abschnitt (36; 36a; 36b usw. ), der sich über die Oberlinie des Trägers erstreckt, und einem rückwärtigen Abschnitt (26; 26a; 26b usw.), der sich über das Hinterteil des Trägers erstreckt, wobei der erwähnte rückwärtige Abschnitt eine damit festgelegte Öffnung (27; 27a; 27b usw.) aufweist, und die erwähnte Öffnung eine kontinuierliche Peripherie aufweist, die sich um eine Fläche des Hinterteils des Trägers herum erstreckt, welche die Schwanzwurzel und den Afterbereich des Trägers einschließt; Behältnismittel (5; 5a; 5b usw.), die mindestens eine damit festgelegte Eingangsöffnung (54; 54a; 65 usw.) zum Auffangen der vom Körper ausgeschiedenen Exkremente haben, wobei diese eine erwähnte Eingangsöffnung eine Peripherie aufweist, die mit der Peripherie dieser einen erwähnten Öffnung des erwähnten rückwärtigen Abschnitts zum Abstützen der erwähnten Behältnismittel am rückwärtigen Abschnitt verbunden ist; und mit dem erwähnten, den Träger berührenden Bekleidungsstück in ausgewählten Bereichen verbundene Mittel, um das Bekleidungsstück straff, jedoch bequem und sicher um den Körper des Trägers herum zu befestigen, wobei die erwähnte eine Öffnung des erwähnten rückwärtigen Abschnitts ausreichende Größe hat, um sowohl die Schwanzwurzel als auch den Afterbereich des Trägers zu umschließen, und die erwähnte kontinuierliche Peripherie der erwähnten einen Öffnung des erwähnten rückwärtigen Abschnitts sich vollständig um eine Fläche des Hinterteils des Trägers, einschließlich sowohl der Schwanzwurzel als auch des Afterbereichs des Trägers erstreckt, dadurch gekennzeichnet, daß die erwähnte eine Eingangsöffnung der erwähnten Behältnismittel ausreichende Größe hat, um sowohl die Schwanzwurzel als auch den Afterbereich des Trägers zu umschließen, daß das erwähnte Behältnismittel so ausgebildet und dimensioniert ist, daß es seitlich mindestens teilweise die erwähnte eine Öffnung des erwähnten rückwärtigen Abschnitts umgibt und sich über die Oberseite des Schwanzes des Trägers mindestens an einer Stelle in einem gewissen Abstand von der Schwanzwurzel aus rückwärts erstreckt und daß die erwähnte Peripherie der erwähnten einen Eingangsöffnung, wie bereits erwähnt, mit der Peripherie dieser erwähnten einen Öffnung des erwähnten rückwärtigen Abschnitts auf einem Umfang verbunden ist, der mindestens ausreicht, den Afterbereich und gegenüberstehende Seitenteile der Schwanzwurzel zu umschließen.

7. Der Gegenstand des Anspruchs 6, wobei das erwähnte Behältnismittel, das mindestens eine damit festgelegte Eingangsöffnung zum Auffangen der vom Körper ausgeschiedenen Exkremente hat, eine Tasche ist, die einen oberen Abschnitt, einen rückwärtigen Abschnitt, in dem sich im allgemeinen die erwähnte Eingangsöffnung befindet, einen vorderen Abschnitt gegenüber dem erwähnten rückwärtigen Abschnitt und eine abgeschlossene Bodenfläche, innerhalb der feste Exkremente umfangen werden können, umfaßt.

8. Der Gegenstand des Anspruchs 7, wobei der erwähnte obere Abschnitt ärmelförmig mit einer damit festgelegten Öffnung geeigneter Größe für den Austritt des Schwanzes gestaltet ist und der erwähnte ärmelförmig gestaltete obere Abschnitt sich über eine gewisse Strecke dem Schwanz entlang und um diesen herum von seiner Wurzel aus rückwärts erstreckt.

9. Der Gegenstand des Anspruchs 8, wobei der erwähnte ärmelförmige Abschnitt sich über eine gewisse Strecke dem Schwanz entlang und um diesen herum nach außen gerichtet in einem Winkel, welcher der Position des Trägerschwanzes angepaßt ist, und von der Schwanzwurzel aus rückwärts erstreckt.

10. Der Gegenstand des Anspruchs 8, wobei der erwähnte ärmelförmige obere Abschnitt sich über eine gewisse Strecke dem Schwanz entlang und um diesen herum im wesentlichen nach oben gerichtet in einer Richtung, die der Position des Trägerschwanzes angepaßt ist, und von der Schwanzwurzel aus rückwärts erstreckt.

11. Der Gegenstand des Anspruchs 8, wobei die erwähnte Tasche Mittel aufweist, die mit der erwähnten abgeschlossenen Bodenfläche zum Zurückhalten flüssiger Exkremente verbunden sind.

12. Der Gegenstand des Anspruchs 11, wobei das erwähnte Mittel zum Zurückhalten flüssiger Exkremente eine absorbierende Einlage ist, die mit der Innenseite der erwähnten Tasche an der erwähnten Bodenfläche verbunden ist.

13. Der Gegenstand des Anspruchs 7, wobei der erwähnte obere Abschnitt abgeschlossen ist.

14. Der Gegenstand des Anspruchs 7, wobei die erwähnte Tasche Mittel zum Einbehalten fester Exkremente innerhalb der erwähnten Tasche nach der Benutzung aufweist.

15. Der Gegenstand des Anspruchs 14, wobei die erwähnten Mittel im allgemeinen zwei Gurte sind, die mit der Außenseite der erwähnten Tasche verbunden sind und sich quer zur erwähnten Tasche verlaufend unterhalb der erwähnten Eingangsöffnung befinden, welche sowohl die Schwanzwurzel als auch den Afterbereich des Trägers umfaßt, und die erwähnten Gurte zu befestigen sind, um feste Exkremente innerhalb der Bodenfläche der erwähnten Tasche einzubehalten.

16. Der Gegenstand des Anspruchs 7, wobei die erwähnte Tasche entlang der Peripherie der erwähnten Eingangsöffnung permanent mit dem rückwärtigen Abschnitt des erwähnten, den Träger berührenden Bekleidungsstücks verbunden ist.

17. Der Gegenstand des Anspruchs 7, wobei die erwähnte Tasche entlang der Peripherie der erwähnten Eingangsöffnung lösbar mit dem rückwärtigen Abschnitt des den Träger berührenden Bekleidungsstücks verbunden ist.

18. Der Gegenstand des Anspruchs 6, wobei die erwähnten Behältnismittel Gurtungsmittel zum Überlagern des Schwanzes des Trägers an einer von der Schwanzwurzel aus in einem gewissen Abstand gelegenen Stelle rückwärts einschließen.

19. Der Gegenstand des Anspruchs 18, wobei das erwähnte Behältnismittel eine Tasche ist, die einen oberen Abschnitt, einen rückwärtigen Abschnitt, in dem sich im allgemeinen die erwähnte Eingangsöffnung befindet, einen vorderen Abschnitt gegenüber dem erwähnten rückwärtigen Abschnitt und eine abgeschlossene Bodenfläche, innerhalb welcher feste Exkremente umfangen werden können, umfaßt; wobei der erwähnte obere Abschnitt ein Loch für den Austritt des Schwanzes aufweist und das erwähnte Loch einander gegenüberliegende Kantenabschnitte hat; und wobei sich die erwähnten Gurtungsmittel von den erwähnten einander gegenüberliegenden Kantenabschnitten des letzgenannten Lochs aus in überlagernder Beziehung zum Schwanz des Trägers an einer von der Schwanzwurzel aus in einem gewissen Abstand gelegenen Stelle rückwärts erstrecken.

20. Der Gegenstand des Anspruchs 18, wobei das erwähnte Behältnismittel eine Tasche ist, die einen oberen Abschnitt, einen rückwärtigen Abschnitt, in dem sich im allgemeinen die erwähnte Eingangsöffnung befindet, einen vorderen Abschnitt gegenüber dem erwähnten rückwärtigen Abschnitt und eine abgeschlossene Bodenfläche, innerhalb welcher feste Exkremente umfangen werden können, umfaßt; wobei der erwähnte obere Abschnitt ein Loch für den Austritt des Schwanzes aufweist und das erwähnte Loch einander gegenüberliegende Kantenabschnitte hat; und wobei die erwähnten Gurtungsmittel im allgemeinen zwei Gurte umfassen, die sich jeweils von den erwähnten einander gegenüberliegenden Kanten des erwähnten Lochs an einer von der Schwanzwurzel aus in einem gewissen Abstand gelegenen Stelle rückwärts erstrecken und die erwähnten Gurte um den Schwanz herum zu befestigen sind, um die erwähnte Tasche in ihrer Position zu halten.

21. Der Gegenstand des Anspruchs 18, wobei das erwähnte Behältnismittel eine Tasche mit abgeschlossener Bodenfläche umfaßt und wobei die erwähnte Tasche mit der erwähnten abgeschlossenen Bodenfläche verbundene Mittel zum Zurückhalten flüssiger Exkremente hat.

22. Der Gegenstand des Anspruchs 21, wobei das erwähnte Mittel zum Zurückhalten flüssiger Exkremente eine absorptionsfähige, mit der Innenseite der Tasche an der erwähnten Bodenfläche verbundene Einlage ist.

23. Der Gegenstand des Anspruchs 6, wobei die Peripherie der erwähnten Eingangsöffnung der erwähnten Behältnismittel die erwähnte eine Öffnung des rückwärtigen Abschnitts seitlich vollständig umgibt.

24. Der Gegenstand des Anspruchs 6, wobei das erwähnte, den Träger berührende Bekleidungsstück, das einen oberen Abschnitt und einen rückwärtigen Abschnitt hat, einen unteren Abschnitt umfaßt, der sich über den Genitalbereich des Trägers erstreckt, wobei der erwähnte untere Abschnitt eine damit festgelegte Öffnung ausreichender Größe hat, um sich vollständig um die Peripherie des Genitalbereichs des Trägers herum zu erstrecken sowie Behältnismittel mit einer abgeschlossenen Bodenfläche und einer Eingangsöffnung zum Auffangen der vom Körper ausgeschiedenen flüssigen Exkremente, wobei die letztgenannte Eingangsöffnung ausreichende Größe hat, um sich vollständig um die Peripherie des Genitalbereichs des Trägers herum zu. erstrecken, und das erwähnte Behältnismittel mit dem erwähnten unteren Abschnitt entlang der Peripherie der erwähnten Öffnung des unteren Abschnitts verbunden ist und das erwähnte Behältnismittel Mittel aufweist, die mit der erwähnten abgeschlossenen Bodenfläche zum Zurückhalten flüssiger Exkremente verbunden sind.

25. Der Gegenstand des Anspruchs 24, wobei der erwähnte untere Abschnitt im allgemeinen elastisch ist und mit dem erwähnten rückwärtigen Abschnitt im allgemeinen durch elastische Mittel verbunden ist, wobei der erwähnte untere Abschnitt im allgemeinen lösbar mit dem erwähnten oberen Abschnitt verbunden ist, wodurch mindestens die Hinterbeine aufnehmende Öffnungen festgelegt werden.

26. Der Gegenstand des Anspruchs 24, wobei das erwähnte Behältnismittel eine Tasche zum Auffangen der vom Körper ausgeschiedenen flüssigen Exkremente umfaßt und die erwähnte Tasche entlang der Peripherie der erwähnten Eingangsöffnung permanent mit dem erwähnten unteren Abschnitt des erwähnten, den Träger berührenden Bekleidungsstücks verbunden ist.

27. Der Gegenstand des Anspruchs 24, wobei das erwähnte Behältnismittel eine Tasche zum Auffangen der ausgeschiedenen flüssigen Exkremente umfaßt und die erwähnte Tasche entlang der Peripherie der erwähnten Eingangsöffnung lösbar mit dem erwähnten unteren Abschnitt des erwähnten, den Träger berührenden Bekleidungsstücks verbunden ist.

28. Der Gegenstand des Anspruchs 24, wobei das erwähnte Behältnismittel eine Tasche umfaßt und das erwähnte Mittel zum Zurückhalten flüssiger Exkremente eine absorptionsfähige mit der Innenseite der erwähnten Tasche an der erwähnten Bodenfläche verbundene Einlage ist.

29. Der Gegenstand des Anspruchs 6, wobei die erwähnten, mit dem erwähnten, den Träger berührenden Bekleidungsstück verbundenen Mittel zur Befestigung des erwähnten Bekleidungsstücks am Träger im allgemeinen elastische verstellbare Gurte zur Anpassung des Bekleidungsstücks an Tiere verschiedener Größe sind.

30. Der Gegenstand des Anspruchs 29, wobei die erwähnten verstellbaren Gurte mit dem erwähnten, den Träger berührenden Bekleidungsstück an Stellen verbunden sind, durch die mindestens die Hinterbeine aufnehmende Öffnungen festgelegt werden.

31. Eine am Körper eines Tieres, beispielsweise eines Hundes, einer Katze oder dergleichen, zu tragende Vorrichtung zum Auffangen und Zurückhalten der vom Körper ausgeschiedenen Exkremente, wobei das erwähnte Tier Träger der Vorrichtung ist und eine Oberlinie, ein Hinterteil, einen Afterbereich am Hinterteil, einen Schwanz mit Schwanzwurzel am Hinterteil über dem Afterbereich, einen Genitalbereich, einen Bauch, Hinterbeine und Vorderbeine besitzt, die erwähnte Schwanzwurzel eine Oberseite hat und der erwähnte Schwanz von der erwähnten Schwanzwurzel aus rückwärts übersteht, und die erwähnte Vorrichtung umfaßt: ein den Träger berührendes Bekleidungsstück (1; 10; 15 usw.) mit einem oberen Abschnitt (36; 36a; 36b usw.), der sich über die Oberlinie des Trägers erstreckt, einem rückwärtigen Abschnitt (26; 26a; 26b usw.), der sich über das Hinterteil des Trägers erstreckt, wobei der erwähnte rückwärtige Abschnitt am Hinterteil eine Öffnung (27; 27a; 27b usw.) aufweist und erste Behältnismittel (5; 5a; 5b usw.) zum Auffangen vom Körper über dieselbe ausgeschiedener fester Exkremente abstützt, einem unteren Abschnitt (93; 93a; 111 usw.), der sich über den Genitalbereich des Trägers erstreckt, wobei der erwähnte untere Abschnitt eine damit festgelegte Öffnung (95; 95a; 114 usw.) ausreichender Größe hat, um sich vollständig um die Peripherie des Genitalbereichs des Trägers herum zu erstrecken, sowie für flüssige Exkremente zweite Behältnismittel (86; 88; 88a usw.) mit einer abgeschlossenen Bodenfläche und einer Eingangsöffnung (206; 211; 231 usw.) zum Auffangen der vom Körper ausgeschiedenen flüssigen Exkremente, wobei diese eine erwähnte Eingangsöffnung ausreichende Größe hat, um sich vollständig um die Peripherie des Genitalbereichs des Trägers herum zu erstrecken und die erwähnten zweiten Behältnismittel entlang der Peripherie der erwähnten Öffnung des erwähnten unteren Abschnitts mit dem erwähnten unteren Abschnitt verbunden sind, sowie in ausgewählten Bereichen mit dem den erwähnten Träger berührenden Bekleidungsstück verbundene Mittel, um das Bekleidungsstück straff, jedoch bequem und sicher um den Körper des Trägers herum zu befestigen, dadurch gekennzeichnet, daß der Bereich des Körpers des Trägers zwischen der Schwanzwurzel und dem Afterbereich des Trägers dadurch behinderungsfrei gehalten wird, daß die ersten Behältnismittel nur durch die unteren und seitlichen Teile des Randes der Öffnung des rückwärtigen Abschnitts abgestützt sind und durch jeweils eines oder beides, den oberen Teil des erwähnten Randes, der um die Oberseite der Schwanzwurzel herumführt bzw. einen Abschnitt des Schwanzes des Trägers in einem gewissen Abstand von seiner Wurzel, und daß die erwähnten zweiten Behältnismittel Mittel aufweisen, die mit der erwähnten abgeschlossenen Bodenfläche zum Zurückhalten flüssiger Exkremente verbunden sind.

**32.** Der Gegenstand des Anspruchs 26, wobei das erwähnte Mittel zum Zurückhalten flüssiger Exkremente eine absorptionsfähige Einlage ist, die an der erwähnten Bodenfläche mit der Innenseite der erwähnten zweiten Behältnismittel verbunden ist.

EP 0 231 171 B1

FIG.1

FIG.2

FIG.3

28

FIG.4

FIG.5

FIG.6

FIG.7

FIG.8

FIG.9

FIG.10

FIG.11

FIG.12

FIG.13

FIG.14

FIG.15

FIG.16

FIG.17

FIG.18

FIG.19

FIG.20

FIG.21

FIG.22

FIG.23

FIG.24

FIG.25

FIG.26

FIG.27

FIG.28

FIG.29

FIG.30

FIG.31

FIG.32

FIG.33

FIG.34

FIG.35

FIG.36

FIG.37

FIG.38

FIG.39

FIG.40

FIG.41

FIG.42

FIG.43

FIG.44

FIG.46

FIG.45

FIG.48

FIG.47

FIG.49

FIG.50

FIG.51

FIG.52

FIG.53

FIG.55

FIG.54

FIG 59

FIG.56

FIG.57

FIG.58

FIG.62

FIG.60

FIG.61

FIG.66

FIG.63

FIG.64

FIG.65

FIG.69

FIG.67

FIG.68

FIG.70

FIG.71

FIG.72

FIG.73

FIG.74

FIG.75

FIG.76

FIG.77

FIG.78

FIG.79

FIG.80

FIG.81

FIG.82

FIG 83

FIG.84

FIG.85

FIG.86

FIG.87

FIG.88

FIG.89   FIG 90   FIG.91

FIG.92

FIG.93

FIG.94

FIG.95

FIG.96

FIG.97

FIG.98

FIG.99

FIG.100

FIG.101

FIG.102

FIG.103

FIG.104

FIG.105   FIG.106   FIG.107   FIG.108

NECK LINE

TOP LINE

252  251  250  249

FIG.109

256

254   253

255

FIG.110

257
258
259   257a
257b   260
257c

FIG.111

257
261
262   257a
257b   263
264
257c

FIG.112

265
266
267   265a
265b   268
264

FIG.113

258
257
12
260
269
270
257a
257b
257c
274
275

FIG.114

266
265
12
268
269
270a
265a
265b
274a
275a

FIG.115

257
264
258
264
257c
257a
257b

FIG.116

261
288
288
21
21
289
263
262
264
264

FIG.117

265
264
266
264
265b
265a

FIG.118

258
281
281
21
21
282
260
259
12
269
12
269

FIG.119

266
295
295
21
21
296
268
267
12
269
12
269

FIG.120

FIG.121

FIG.122

FIG.123

FIG.125

FIG.124